# EUROPEAN PATENT APPLICATION

(11) **EP 4 657 788 A1**
(43) Date of publication of application: **03.12.2025**
(21) Application number: 24752681.7
(22) Date of filing: 18.01.2024
(51) Int. Cl.: H04L 5/00

(54) **COMMUNICATION METHOD AND APPARATUS, AND STORAGE MEDIUM AND COMPUTER PROGRAM PRODUCT**

(30) Priority: 10.02.2023 CN 202310125183
(71) Applicant: Huawei Technologies Co., Ltd., Shenzhen, Guangdong 518129 (CN)
(72) Inventor: ZHU, Ningbo, Shenzhen, Guangdong 518129 (CN); HAO, Jinping, Shenzhen, Guangdong 518129 (CN); GAO, Xin, Shenzhen, Guangdong 518129 (CN); YU, Yingjie, Shenzhen, Guangdong 518129 (CN)
(74) Representative: Goddar, Heinz J.
(86) International application number: PCT/CN2024/073087
(87) International publication number: WO 2024/164824

(57) **Abstract**

A communication method and apparatus, a storage medium, and a computer program product are provided, to configure a transmission of a reference signal for a terminal apparatus in a scenario in which the terminal apparatus moves. In this application, a first network apparatus receives first information, where the first information includes information used to configure a transmission of a reference signal of a terminal apparatus, and the reference signal is used to position the terminal device; the first network apparatus receives a terminal apparatus context request message from a second network apparatus; and the first network apparatus sends second information to the second network apparatus, where the second information is determined based on the first information, the second information includes information used to configure a transmission of the reference signal of the terminal apparatus, and a number of transmissions of the reference signal that is determined based on the first information is different from a number of transmissions of the reference signal that is determined based on the second information. In this way, the second network apparatus may configure a more proper transmission of the reference signal for the terminal apparatus based on the second information.

## Description

### CROSS-REFERENCE TO RELATED APPLICATIONS

This application claims priority to Chinese Patent Application No. 202310125183.9, filed with the China National Intellectual Property Administration on February 10, 2023 and entitled "COMMUNICATION METHOD AND APPARATUS, STORAGE MEDIUM, AND COMPUTER PROGRAM PRODUCT", which is incorporated herein by reference in its entirety.

### TECHNICAL FIELD

This application relates to the field of positioning technologies, and in particular, to a communication method and apparatus, a storage medium, and a computer program product.

### BACKGROUND

A positioning service is one of important functions in a new radio (new radio, NR) system. Currently, positioning technologies may include an uplink positioning technology, a downlink positioning technology, and an uplink and downlink positioning technology. For example, the positioning technologies include an uplink (uplink, UL) time difference of arrival (time difference of arrival, TDOA) positioning technology, an UL angle of arrival (angle of arrival, AOA) positioning technology, and the like. In the positioning technology (for example, the uplink positioning technology or the uplink and downlink positioning technology), an access network device may configure, for a terminal device, a transmission of a reference signal used for positioning, for example, configure information for the reference signal (for example, configure a resource for the reference signal), and the access network device sends the configuration information of the reference signal to the terminal device. The terminal device may send the reference signal based on the information of the reference signal that is configured by the access network device for the terminal device. One or more access network devices measure the reference signal sent by the terminal device, to obtain a measurement result. Further, the access network device may report the obtained measurement result to a location management function network element, so that the location management function network element determines location information of the terminal device with reference to each measurement result or other information.

When a terminal device is in a radio resource control (radio resource control, RRC) connected (connected) state, an access network device accessed by the terminal device may configure a transmission of a reference signal for the terminal device by using an RRC reconfiguration message.

In a 5th generation mobile communication technology, an RRC inactive (inactive) state and an RRC idle (idle) state are added for the terminal device. The terminal device in the RRC inactive state or the RRC idle state may move, for example, may move from a cell (a cell of a source access network device) to another cell (for example, a cell of a target access network device), that is, the terminal device in the RRC inactive state or the RRC idle state may move out of an original cell. How to configure a transmission of a reference signal for a terminal device that moves becomes an urgent problem to be resolved.

### SUMMARY

Embodiments of this application provide a communication method and apparatus, a storage medium, and a computer program product, to configure a transmission of a reference signal for a moving terminal apparatus more properly.

**According to a first aspect,** an embodiment of this application provides a communication method. The method is applicable to a first network apparatus. The first network apparatus may be, for example, a network device or a unit, a module, or a chip (system) in the network device.

In this application, the first network apparatus receives first information, where the first information includes information used to configure a transmission of a reference signal of a terminal apparatus, and the reference signal is used to position the terminal device; the first network apparatus receives a terminal apparatus context request message from a second network apparatus; and the first network apparatus sends second information to the second network apparatus, where the second information is determined based on the first information, the second information includes information used to configure a transmission of the reference signal of the terminal apparatus, and a number of transmissions of the reference signal that is determined based on the first information is different from a number of transmissions of the reference signal that is determined based on the second information.

The terminal apparatus may move, and the first information is generated based on a situation of the terminal apparatus in a past time point or time period. If the second network apparatus still configures a transmission of the reference signal for the terminal apparatus based on the first information, the second network apparatus may configure an improper transmission of the reference signal for the terminal apparatus. However, in this application, the first network apparatus sends the second information instead of the first information to the second network apparatus. The number of transmissions that is determined based on the second information is different from the number of transmissions that is determined based on the first information. Therefore, the second network apparatus may configure a more proper transmission of the reference signal for the terminal apparatus based on the received second information.

In a possible implementation, the first information may be used by the first network apparatus to configure a transmission of the reference signal of the terminal apparatus based on the number of transmissions of the reference signal that is determined based on the first information. After the first network apparatus receives the first information, the first network apparatus may configure a transmission of the reference signal of the terminal apparatus based on the number of transmissions of the reference signal that is determined based on the first information. It may also be understood that the first information is used by the first network apparatus to configure a transmission of the terminal apparatus based on the first information. The first network apparatus configures a transmission of the reference signal of the terminal apparatus based on the first information. A number of periodic transmissions of the reference signal that is configured by the first network apparatus for the terminal apparatus is a number of transmissions that is determined based on the first information. For ease of description in subsequent content, in this application, the number of transmissions of the reference signal that is determined based on the first information is referred to as a first number of transmissions.

In a possible implementation, the second information may be used by the second network apparatus to configure a transmission of the reference signal of the terminal apparatus based on the number of transmissions of the reference signal that is determined based on the second information. After the second network apparatus receives the second information, the second network apparatus may configure a transmission of the reference signal of the terminal apparatus based on the number of transmissions of the reference signal that is determined based on the second information. It may also be understood that the second information is used by the second network apparatus to configure a transmission of the terminal apparatus based on the second information. The second network apparatus configures a transmission of the reference signal of the terminal apparatus based on the second information. A number of periodic transmissions of the reference signal that is configured by the second network apparatus for the terminal apparatus is a number of transmissions that is determined based on the second information. For ease of description in subsequent content, in this application, the number of transmissions of the reference signal that is determined based on the second information is referred to as a second number of transmissions. It can be learned that, in this embodiment of this application, the second number of transmissions is different from the first number of transmissions. Therefore, the second network apparatus may configure a more proper number of periodic transmissions for the reference signal of the terminal apparatus, to prevent the terminal apparatus from performing excessive reference signal transmissions, thereby reducing resources.

The second information in this embodiment of this application may be generated by the first network apparatus, or may be obtained by the first network apparatus from another apparatus. For example, the first network apparatus may send a request to a location management apparatus, the location management apparatus sends the second information to the first network apparatus, and then the first network apparatus sends the second information to the second network apparatus. This can improve solution flexibility.

In a possible implementation, the second number of transmissions is a number of remaining transmissions of the reference signal. This can prevent the terminal apparatus as far as possible from performing excessive reference signal transmissions, thereby wasting fewer resources.

In a possible implementation, the second information includes information of a first timestamp and information of a third number of transmissions, and the information of the first timestamp is information of a timestamp associated with the third number of transmissions. The second network apparatus may estimate, with reference to the first timestamp and a current time point, a number of transmissions of the reference signal that have been performed by the terminal apparatus. In addition, because the information of the first timestamp is associated with the third number of transmissions, the second network apparatus may calculate a number of remaining transmissions with reference to the third number of transmissions and the estimated number of transmissions of the reference signal that have been performed by the terminal apparatus, and then may configure a number of periodic transmissions of the terminal apparatus as the number of remaining transmissions. This can prevent the terminal apparatus from performing excessive reference signal transmissions, thereby wasting fewer resources.

For example, the third number of transmissions is a number of transmissions of the reference signal that is requested by the location management apparatus. The information of the first timestamp indicates at least one of the following content: a time point at which the information of the third number of transmissions is sent from the location management apparatus; a time point at which the information of the third number of transmissions arrives at a third network apparatus, where the third network apparatus is a network apparatus that receives the information of the third number of transmissions from the location management apparatus, and the third network apparatus is the same as or different from the first network apparatus; or a time point at which the third network apparatus sends configuration information of the reference signal to the terminal apparatus based on the information of the third number of transmissions.

In another possible implementation, the second information includes information of a first timestamp. The information of the first timestamp indicates a time point at which the terminal apparatus starts to send the reference signal or a time point at which the third network apparatus sends configuration information of the reference signal to the terminal apparatus.

After receiving the information of the first timestamp, the second network apparatus may calculate, with reference to a current time point, a time length between the two time points, determine, based on period duration of the reference signal, a number of transmissions (or referred to as a number of periodicities) of the reference signal that have been performed by the terminal apparatus, and then determine, with reference to the information of the third number of transmissions, a number of remaining transmissions (or referred to as a number of periodic transmissions) of the reference signal that still need to be performed by the terminal apparatus. For example, the terminal apparatus may use a difference between the third number of transmissions and the number of transmissions of the reference signal that have been performed by the terminal apparatus as the number of remaining transmissions of the reference signal that still need to be performed by the terminal apparatus.

The information of the first timestamp may be determined by the first network apparatus, or may be received from another device, for example, may be received from the location management apparatus, the terminal apparatus, or another network apparatus. Alternatively, the information of the first timestamp is carried in the first information. For example, the first information includes the information of the first timestamp and the information of the third number of transmissions. This solution can reduce workload of the first network apparatus.

In this application, the second information may include information of a second number of transmissions. Because the second information sent by the first network apparatus includes the information of the second number of transmissions, the second network apparatus may not need to calculate the second number of transmissions, thereby reducing a calculation amount of the second network apparatus.

In a possible implementation, the second number of transmissions is determined based on a first number of transmissions and a number of transmissions of the reference signal that are performed by the terminal apparatus after the first network apparatus receives the first information. Because the first network apparatus may estimate the number of transmissions of the reference signal that are performed by the terminal apparatus after the first network apparatus receives the first information, the first network apparatus may further calculate the second number of transmissions with reference to the first number of transmissions. This solution has a relatively small calculation amount and is easy to implement.

Alternatively, the second number of transmissions is determined based on the third number of transmissions and a number of transmissions of the reference signal that are performed by the terminal apparatus after the third network apparatus receives the information of the third number of transmissions. In this solution, the first information may include the third number of transmissions and the first timestamp. The first network apparatus may determine, based on the first timestamp, the number of transmissions of the reference signal that are performed by the terminal apparatus after the third network apparatus receives the information of the third number of transmissions. Further, the first network apparatus calculates the second number of transmissions with reference to the third number of transmissions. This can improve solution flexibility.

In a possible implementation, the first information includes information of a first number of transmissions. The second information is obtained by the first network apparatus by performing at least the following operation on the first information: The first network apparatus modifies the information of the first number of transmissions in the first information to the information of the second number of transmissions. This solution is relatively simple without additional information, so that resource overheads can be reduced.

In a possible implementation, the first information includes preset information, there is an association relationship between the preset information and a location of the terminal apparatus, and the second information does not include the preset information. For example, the preset information includes path loss reference information and/or spatial relation information. This can prevent the second network apparatus from configuring a transmission of the reference signal for the terminal apparatus based on improper information.

In a possible implementation, the second information is obtained by the first network apparatus by performing at least the following operation on the first information: The first network apparatus deletes the preset information included in the first information. This can reduce resource overheads.

In a possible implementation, the terminal apparatus context request message further includes reference signal update cause information. Therefore, the first network apparatus may learn that information used to configure a transmission of the reference signal for the terminal apparatus needs to be provided for the second network apparatus, and other information may not need to be provided, thereby reducing resource overheads.

In a possible implementation, after the first information is received and before the second information is sent to the second network apparatus, the method further includes: The first network apparatus sends an RRC connection release indication message to the terminal apparatus, where the RRC connection release indication message includes a transmission of the reference signal that is configured by the first network apparatus for the terminal apparatus. Therefore, the terminal apparatus may enter an RRC inactive state or an RRC idle state, thereby reducing power consumption of the terminal apparatus.

**According to a second aspect,** an embodiment of this application provides a communication method. The method is applicable to a second network apparatus. The second network apparatus may be, for example, a network device or a unit, a module, or a chip (system) in the network device.

In this application, the second network apparatus sends a terminal apparatus context request message to a first network apparatus; and the second network apparatus receives second information from the first network apparatus, where the second information is determined based on first information, the first information includes information used to configure a transmission of a reference signal of a terminal apparatus, the reference signal is used to position the terminal device, the second information includes information used to configure a transmission of the reference signal of the terminal apparatus, and a number of transmissions of the reference signal that is determined based on the first information is different from a number of transmissions of the reference signal that is determined based on the second information.

The terminal apparatus may move, and the first information is generated based on a situation of the terminal apparatus in a past time point or time period. If the second network apparatus still configures a transmission of the reference signal for the terminal apparatus based on the first information, the second network apparatus may configure an improper transmission of the reference signal for the terminal apparatus. However, in this application, the first network apparatus sends the second information instead of the first information to the second network apparatus. The number of transmissions that is determined based on the second information is different from the number of transmissions that is determined based on the first information. Therefore, the second network apparatus may configure a more proper transmission of the reference signal for the terminal apparatus based on the received second information.

In a possible implementation, the first information may be used by the first network apparatus to configure a transmission of the reference signal of the terminal apparatus based on the number of transmissions of the reference signal that is determined based on the first information. For ease of description in subsequent content, in this application, the number of transmissions of the reference signal that is determined based on the first information is referred to as a first number of transmissions. For related descriptions and beneficial effects, refer to the related descriptions of the first aspect. Details are not described again.

In a possible implementation, the second information may be used by the second network apparatus to configure a transmission of the reference signal of the terminal apparatus based on the number of transmissions of the reference signal that is determined based on the second information. After the second network apparatus receives the second information, the second network apparatus may configure a transmission of the reference signal of the terminal apparatus based on the number of transmissions of the reference signal that is determined based on the second information. For ease of description in subsequent content, in this application, the number of transmissions of the reference signal that is determined based on the second information is referred to as a second number of transmissions. For related descriptions and beneficial effects, refer to the related descriptions of the first aspect. Details are not described again.

In a possible implementation, the second number of transmissions is a number of remaining transmissions of the reference signal. For related descriptions and beneficial effects, refer to the related descriptions of the first aspect. Details are not described again.

In a possible implementation, the second information includes information of a first timestamp and information of a third number of transmissions, and the information of the first timestamp is information of a timestamp associated with the third number of transmissions. For related descriptions and beneficial effects, refer to the related descriptions of the first aspect. Details are not described again.

For example, the third number of transmissions is a number of transmissions of the reference signal that is requested by a location management apparatus. The information of the first timestamp indicates at least one of the following content: a time point at which the information of the third number of transmissions is sent from the location management apparatus; a time point at which the information of the third number of transmissions arrives at a third network apparatus, where the third network apparatus is a network apparatus that receives the information of the third number of transmissions from the location management apparatus, and the third network apparatus is the same as or different from the first network apparatus; or a time point at which the third network apparatus sends configuration information of the reference signal to the terminal apparatus based on the information of the third number of transmissions. For related descriptions and beneficial effects, refer to the related descriptions of the first aspect. Details are not described again.

In another possible implementation, the second information includes information of a first timestamp. The information of the first timestamp indicates a time point at which the terminal apparatus starts to send the reference signal or a time point at which the third network apparatus sends configuration information of the reference signal to the terminal apparatus. For related descriptions and beneficial effects, refer to the related descriptions of the first aspect. Details are not described again.

In a possible implementation, the first information includes information of a first timestamp and information of a third number of transmissions. For related descriptions and beneficial effects, refer to the related descriptions of the first aspect. Details are not described again.

In this application, the second information may include information of a second number of transmissions. For example, the second number of transmissions is determined based on a first number of transmissions and a number of transmissions of the reference signal that are performed by the terminal apparatus after the first network apparatus receives the first information. For another example, the second number of transmissions is determined based on the third number of transmissions and a number of transmissions of the reference signal that are performed by the terminal apparatus after the third network apparatus receives the information of the third number of transmissions. For related descriptions and beneficial effects, refer to the related descriptions of the first aspect. Details are not described again.

In a possible implementation, the first information includes information of a first number of transmissions. The second information is obtained by the first network apparatus by performing at least the following operation on the first information: The first network apparatus modifies the information of the first number of transmissions in the first information to the information of the second number of transmissions. For related descriptions and beneficial effects, refer to the related descriptions of the first aspect. Details are not described again.

In a possible implementation, the first information includes preset information, there is an association relationship between the preset information and a location of the terminal apparatus, and the second information does not include the preset information. For related descriptions and beneficial effects, refer to the related descriptions of the first aspect. Details are not described again.

In a possible implementation, after the second network apparatus receives the second information from the first network apparatus, the second network apparatus determines the second number of transmissions of the reference signal based on the second information, and when a number of transmissions performed by the terminal apparatus reaches the second number of transmissions, the second network apparatus sends, to the terminal apparatus, information indicating that the terminal apparatus does not need to transmit the reference signal. This can prevent the terminal apparatus from performing excessive reference signal transmissions, thereby reducing power consumption of the terminal apparatus.

In a possible implementation, the second network apparatus sends a first message to a location management apparatus, where the first message is used to request to update path loss reference information and/or spatial relation information; the second network apparatus receives fourth information from the location management apparatus, where the fourth information includes path loss reference information and/or spatial relation information; and the second network apparatus sends configuration information of the reference signal to the terminal apparatus, where the configuration information of the reference signal is determined based on the fourth information and the second information. Because the second network apparatus may re-determine spatial relation information and path loss reference information for the terminal apparatus, the second network apparatus configures a more proper reference signal parameter for the terminal apparatus based on the newly obtained spatial relation information and path loss reference information.

In a possible implementation, the second network apparatus receives measurement information from the terminal apparatus, where the measurement information is, for example, radio resource management (radio resource management, RRM) measurement information; and the second network apparatus sends the configuration information of the reference signal to the terminal apparatus, where the configuration information of the reference signal is determined based on the measurement information and the second information. In a possible implementation, the path loss reference information and/or the spatial relation information in the configuration information of the reference signal are/is determined based on the measurement information. Because the second network apparatus may reconfigure the spatial relation information and the path loss reference information for the terminal apparatus based on the measurement information reported by the terminal apparatus, the second network apparatus may configure a more proper reference signal parameter for the terminal apparatus.

In a possible implementation, the terminal apparatus context request message further includes reference signal update cause information. For related descriptions and beneficial effects, refer to the related descriptions of the first aspect. Details are not described again.

In a possible implementation, before the terminal apparatus context request message is sent to the first network apparatus, the method further includes: The second network apparatus receives a radio resource control (radio resource control, RRC) connection establishment request message from the terminal apparatus, where the RRC connection establishment request message further includes reference signal update cause information. Therefore, the second network apparatus may learn that information used to configure a transmission of the reference signal for the terminal apparatus needs to be requested from the first network apparatus, and other information may not need to be requested, thereby reducing resource overheads.

**According to a third aspect,** an embodiment of this application provides a communication method. The method is applicable to a second network apparatus. The second network apparatus may be, for example, a network device or a unit, a module, or a chip (system) in the network device.

In this application, a location management apparatus obtains a positioning information request; and the location management apparatus sends the positioning information request to a first network apparatus, where the positioning information request includes information of a first timestamp, and the information of the first timestamp indicates a time point at which a number of transmissions of a reference signal that is requested by the location management apparatus is sent from the location management apparatus.

Therefore, the network apparatus that receives the information of the first timestamp may calculate, with reference to a current time point, a time length between the two time points, determine, based on period duration of the reference signal, a number of transmissions (or referred to as a number of periodicities) of the reference signal that have been performed by a terminal apparatus, and then determine, with reference to information of a third number of transmissions, a number of remaining transmissions (or referred to as a number of periodic transmissions) of the reference signal that still need to be performed by the terminal apparatus.

In a possible implementation, the location management apparatus receives a first message from the second network apparatus, where the first message is used to request to update path loss reference information and/or spatial relation information; and the location management apparatus sends fourth information to the second network apparatus, where the fourth information includes path loss reference information and/or spatial relation information. Because the second network apparatus may re-determine spatial relation information and path loss reference information for the terminal apparatus, the second network apparatus configures a more proper reference signal parameter for the terminal apparatus based on the newly obtained spatial relation information and path loss reference information.

**According to a fourth aspect,** a communication apparatus is provided. The communication apparatus may be the foregoing first network apparatus, second network apparatus, or location management apparatus. The communication apparatus may include a communication unit and a processing unit, to perform any one of the first aspect to the third aspect or perform any one of the possible implementations of the first aspect to the third aspect. The communication unit is configured to perform functions related to sending and receiving. Optionally, the communication unit includes a receiving unit and a sending unit. In a design, the communication apparatus is a communication chip, the processing unit may be one or more processors or processor cores, and the communication unit may be an input/output circuit or a port of the communication chip.

In another design, the communication unit may be a transmitter and a receiver, or the communication unit may be a transmitter machine and a receiver machine.

Optionally, the communication apparatus further includes modules that may be configured to perform any one of the first aspect to the third aspect or perform any one of the possible implementations of the first aspect to the third aspect.

**According to a fifth aspect,** a communication apparatus is provided. The communication apparatus may be the foregoing first network apparatus, second network apparatus, or location management apparatus. The communication apparatus may include a processor and a memory, to perform any one of the first aspect to the third aspect or perform any one of the possible implementations of the first aspect to the third aspect. Optionally, the communication apparatus further includes a transceiver. The memory is configured to store a computer program or instructions. The processor is configured to invoke the computer program or the instructions from the memory and run the computer program or the instructions. When the processor executes the computer program or the instructions in the memory, the communication apparatus is enabled to perform any one of the first aspect to the third aspect or perform any one of the possible implementations of the first aspect to the third aspect.

Optionally, there are one or more processors, and there are one or more memories.

Optionally, the memory may be integrated with the processor, or the memory and the processor are separately disposed.

Optionally, the transceiver may include a transmitter machine (transmitter) and a receiver machine (receiver).

**According to a sixth aspect,** a communication apparatus is provided. The communication apparatus may be the foregoing first network apparatus, second network apparatus, or location management apparatus. The communication apparatus may include a processor, to perform any one of the first aspect to the third aspect or perform any one of the possible implementations of the first aspect to the third aspect. The processor is coupled to a memory. Optionally, the communication apparatus further includes the memory. Optionally, the communication apparatus further includes a communication interface, and the processor is coupled to the communication interface.

In an implementation, when the communication apparatus is the first network apparatus, the second network apparatus, or the location management apparatus, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

**According to a seventh aspect,** a system is provided. The system includes the foregoing first network apparatus.

In a possible implementation, the system may further include one or more second network apparatuses. In another possible implementation, the system may further include one or more terminal apparatuses. In another possible implementation, the system may further include one or more location management apparatuses.

**According to an eighth aspect,** a computer program product is provided. The computer program product includes a computer program (which may also be referred to as code or instructions). When the computer program is run, a computer is enabled to perform any one of the first aspect to the third aspect or perform any one of the possible implementations of the first aspect to the third aspect.

**According to a ninth aspect,** a computer-readable storage medium is provided. The computer-readable storage medium stores a computer program (which may also be referred to as code or instructions). When the computer program is run on a computer, the computer is enabled to perform any one of the first aspect to the third aspect or perform any one of the possible implementations of the first aspect to the third aspect.

**According to a tenth aspect,** a chip system is provided. The chip system may include a processor. The processor is coupled to a memory, and may be configured to perform any one of the first aspect to the third aspect or perform any one of the possible implementations of the first aspect to the third aspect. Optionally, the chip system further includes the memory. The memory is configured to store a computer program (which may also be referred to as code or instructions). The processor is configured to invoke the computer program from the memory and run the computer program, so that a device on which the chip system is installed performs any one of the first aspect to the third aspect or performs any one of the possible implementations of the first aspect to the third aspect.

**According to an eleventh aspect,** a processing apparatus is provided, including an interface circuit and a processing circuit. The interface circuit may include an input circuit and an output circuit. The processing circuit is configured to: receive a signal through the input circuit, and transmit a signal through the output circuit, so that any one of the first aspect to the third aspect or any one of the possible implementations of the first aspect to the third aspect is implemented.

In a specific implementation process, the processing apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, and a signal that is output by the output circuit may be output to, for example, but not limited to, a transmitter and transmitted by the transmitter. In addition, the input circuit and the output circuit may be a same circuit. The circuit is used as the input circuit and the output circuit at different moments. Specific implementations of the processor and various circuits are not limited in this application.

In an implementation, when the communication apparatus is a first network apparatus, a second network apparatus, or a location management apparatus, the interface circuit may be a radio frequency processing chip in the first network apparatus, the second network apparatus, or the location management apparatus, and the processing circuit may be a baseband processing chip in the first network apparatus, the second network apparatus, or the location management apparatus.

In another implementation, the communication apparatus may be some components in the first network apparatus, the second network apparatus, or the location management apparatus, for example, an integrated circuit product such as a system chip or a communication chip. The interface circuit may be an input/output interface, an interface circuit, an output circuit, an input circuit, a pin, a related circuit, or the like on the chip or the chip system. The processing circuit may be a logic circuit on the chip.

### BRIEF DESCRIPTION OF DRAWINGS

FIG. 1 is a diagram of an architecture of a communication system to which an embodiment of this application is applicable;
FIG. 2A is a diagram of an architecture of another communication system to which an embodiment of this application is applicable;
FIG. 2B is a diagram of an architecture of another communication system to which an embodiment of this application is applicable;
FIG. 2C is a diagram of an architecture of another communication system to which an embodiment of this application is applicable;
FIG. 2D is a diagram of an architecture of another communication system to which an embodiment of this application is applicable;
FIG. 3 is a diagram of a scenario to which an embodiment of this application is applicable;
FIG. 4 is a schematic flowchart of a communication method according to an embodiment of this application;
FIG. 5 is a schematic flowchart of a communication method according to an embodiment of this application;
FIG. 6A is a diagram of a scenario according to an embodiment of this application;
FIG. 6B is a schematic flowchart of another communication method according to an embodiment of this application;
FIG. 7 is a schematic flowchart of another communication method according to an embodiment of this application;
FIG. 8 is a diagram of a structure of a communication apparatus according to an embodiment of this application;
FIG. 9 is a diagram of a structure of a communication apparatus according to an embodiment of this application; and
FIG. 10 is a diagram of a structure of a communication apparatus according to an embodiment of this application.

### DESCRIPTION OF EMBODIMENTS

The following first describes nouns and terms in embodiments of this application.

### (1) Signal used for positioning.

A reference signal in embodiments of this application may be understood as a signal that can be used for positioning, or may be understood as a reference signal that can be used for positioning. The reference signal in embodiments of this application may also be replaced with a signal, a positioning signal, or a positioning reference signal.

For example, the reference signal in embodiments of this application may be a positioning reference signal (positioning reference signal, PRS) (for example, a sidelink (sidelink, SL)-PRS), or may be a sounding reference signal (sounding reference signal, SRS), or may be one or more of a channel state information reference signal (channel state information reference signal, CSI-RS), a demodulation reference signal (demodulation reference signal, DMRS), a phase tracking reference signal (phase tracking reference signal, PTRS), and a synchronization signal and physical sidelink broadcast channel block (synchronization signal and physical sidelink broadcast channel block, SSB).

Solutions provided in embodiments of this application are applicable to transmitting a signal used for positioning between two apparatuses, for example, transmitting a signal used for positioning between a terminal apparatus and a first network apparatus, or transmitting a signal used for positioning between a terminal apparatus and a second network apparatus, or transmitting a signal used for positioning between terminal apparatuses. When a signal used for positioning is transmitted between terminal apparatuses, it may also be understood that the solutions provided in embodiments of this application are also applicable to a sidelink (sidelink, SL). In this case, the signal used for positioning may be transmitted between a terminal apparatus in an RRC idle state or an RRC inactive state and another terminal apparatus within a wake-up time period.

The sidelink in embodiments of this application may also be referred to as a side link, a sidelink, a direct link, a sidelink, a secondary link, or the like. In embodiments of this application, the foregoing terms each mean a link established between devices of a same type, and have a same meaning. Devices of a same type may be a link between terminal devices, or the like. For the link between terminal devices, there is a device-to-device (device-to-device, D2D) link defined in the 3rd generation partnership project (3rd Generation Partnership Project, 3GPP) release (Rel)-12/13, and there is also a vehicle-to-everything (vehicle-to-everything, V2X) link defined by the 3GPP for the internet of vehicles, such as a vehicle to vehicle, vehicle to mobile phone, or vehicle to any entity link, including Rel-14/15. The V2X link further includes an NR system-based V2X link and the like in Rel-16 and later releases that are currently being researched by the 3GPP.

### (2) Radio resource control (radio resource control, RRC) state.

A terminal device has three RRC states: an RRC connected (connected) state, an RRC idle (idle) state, and an RRC inactive (inactive) state.

RRC connected state (which may also be referred to as a connected state for short, where "connected state" and "RRC connected state" are a same concept and are interchangeable in this specification): The terminal device establishes an RRC connection to a network and then can perform data transmission.

RRC idle state (which may also be referred to as an idle state for short, where "idle state" and "RRC idle state" are a same concept and are interchangeable in this specification): The terminal device does not establish the RRC connection to the network, and a base station does not store a context of the terminal device. If the terminal device needs to transit from the RRC idle state to the RRC connected state, the terminal device needs to initiate an RRC connection setup procedure first.

RRC inactive state (which may also be referred to as an RRC non-activated state, or referred to as a non-activated state or an inactive state for short, where "deactive state", "non-activated", "non-active state", "deactivated state", "inactive state", "RRC inactive state", or "RRC deactivated state" are a same concept and are interchangeable in this specification): The terminal device previously enters the RRC connected state at an anchor base station, and then the anchor base station releases the RRC connection, but stores the context of the terminal device. If the terminal device needs to re-enter the RRC connected state from the RRC inactive state, the terminal device needs to initiate an RRC connection resume procedure (or referred to as an RRC connection reestablishment procedure) at a base station on which the terminal device currently camps. Because the terminal device may be in a moving state, the base station on which the terminal device currently camps and the anchor base station of the terminal device may be a same base station, or may be different base stations. In comparison with the RRC establishment procedure, the RRC resume procedure has a shorter delay and lower signaling overheads. However, the base station needs to store the context of the terminal device, resulting in storage overheads of the base station.

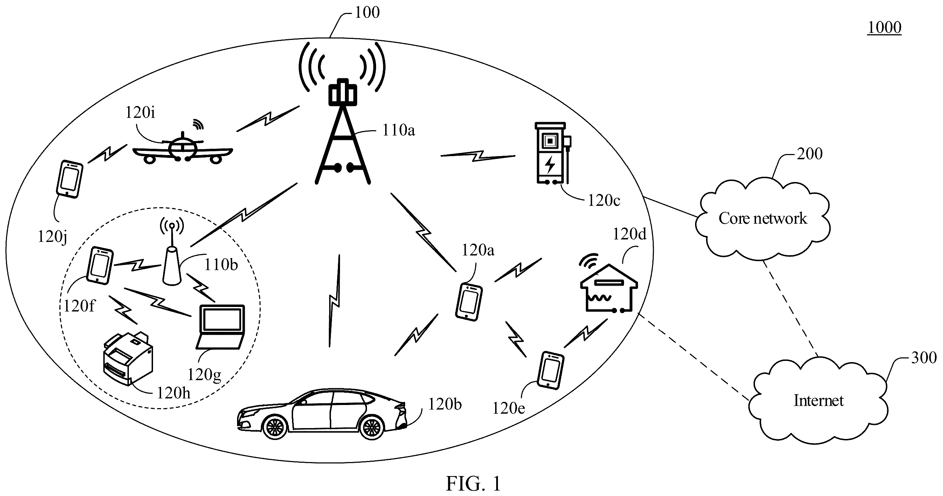

**FIG. 1** is an example of a diagram of an architecture of a communication system 1000 to which an embodiment of this application is applicable. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal device (for example, 120a to 120j in FIG. 1). The terminal device is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. Terminal devices may be connected to each other in a wired or wireless manner, and radio access network devices may be connected to each other in a wired or wireless manner. FIG. 1 is merely a diagram. The communication system may further include other network devices, for example, may further include a wireless relay device and a wireless backhaul device, which are not shown in FIG. 1.

The network device in embodiments of this application includes, for example, a radio access network (radio access network, RAN) device. The radio access network device may be a base station (base station), an evolved NodeB (evolved NodeB, eNodeB), a transmission reception point (transmission reception point, TRP), a transmission point (transmission point, TP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that completes some functions of the base station, for example, a central unit (central unit, CU) or a distributed unit (distributed unit, DU). Herein, the CU completes functions of a radio resource control protocol and a packet data convergence protocol (packet data convergence protocol, PDCP) of the base station, and may further complete functions of a service data adaptation protocol (service data adaptation protocol, SDAP); and the DU completes functions of a radio link control layer and a medium access control (medium access control, MAC) layer of the base station, and may further complete some or all of functions of a physical layer. For detailed descriptions of the foregoing protocol layers, refer to technical specifications related to the 3rd generation partnership project (3rd generation partnership project, 3GPP).

The radio access network device may be a macro base station (for example, 110a in FIG. 1), or may be a micro base station or an indoor base station (for example, 110b in FIG. 1), or may be a relay node, a donor node, or the like. A specific technology and a specific device form that are used by the radio access network device are not limited in embodiments of this application. For ease of description, the following provides descriptions by using an example in which the radio access network device is a base station.

The terminal device may also be referred to as a terminal device, user equipment (user equipment, UE), a mobile station, a mobile terminal device, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, smart grid, smart furniture, smart office, smart wearable, smart transportation, and smart city. The terminal device may be a mobile phone, a tablet computer, a computer having a wireless transceiver function, a wearable device, a vehicle, an uncrewed aerial vehicle, a helicopter, an airplane, a ship, a robot, a robot arm, a smart home device, a sensor, or the like. A specific technology and a specific device form that are used by the terminal device are not limited in embodiments of this application.

The terminal device may establish a connection to a carrier network through an interface (for example, N1) provided by the carrier network, and use services such as data and/or voice provided by the carrier network. The terminal device may further access a domain name system (domain name system, DNS) over the carrier network, and use a carrier service deployed on the DNS and/or a service provided by a third party. The third party may be a service party other than the carrier network and the terminal device, and may provide services such as data and/or voice for the terminal device. A specific representation form of the third party may be specifically determined based on an actual application scenario, and is not limited herein.

The terminal device may also be referred to as a terminal device, user equipment (user equipment, UE), a mobile station, a mobile terminal device, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, smart grid, smart furniture, smart office, smart wearable, smart transportation, and smart city. The terminal device may be a mobile phone, a tablet computer, a computer having a wireless transceiver function, a wearable device, a vehicle, an uncrewed aerial vehicle, a helicopter, an airplane, a ship, a robot, a robot arm, a smart home device, a roadside unit (roadside unit, RSU), or the like. A specific technology and a specific device form that are used by the terminal device are not limited in embodiments of this application.

The base station and the terminal device may be at fixed locations or are movable. The base station and the terminal device may be deployed on the land, including indoor devices, outdoor devices, handheld devices, or vehicle-mounted devices; or may be deployed on the water; or may be deployed on an airplane, a balloon, or an artificial satellite in the air. Application scenarios of the base station and the terminal device are not limited in embodiments of this application.

Roles of the base station and the terminal device may be relative. For example, a helicopter or an uncrewed aerial vehicle 120i in FIG. 1 may be configured as a mobile base station, and for those terminal devices 120j accessing the radio access network 100 through 120i, the terminal device 120i is a base station. However, for the base station 110a, 120i is a terminal device, that is, communication between 110a and 120i is performed according to a wireless air interface protocol. Certainly, communication between 110a and 120i may alternatively be performed according to an interface protocol between base stations. In this case, for 110a, 120i is also a base station. Therefore, both the base station and the terminal device may be collectively referred to as a communication apparatus, 110a and 110b in FIG. 1 may be referred to as a communication apparatus having a function of the base station, and 120a to 120j in FIG. 1 may be referred to as a communication apparatus having a function of the terminal device.

Communication between a base station and a terminal device, between base stations, or between terminal devices may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as smart grid, industrial control, smart transportation, and smart city. A function of the terminal device may alternatively be performed by a module (for example, a chip or a modem) in the terminal device, or may be performed by an apparatus including the function of the terminal device.

In this application, the base station sends a downlink signal or downlink information to the terminal device, where the downlink information is carried on a downlink channel; and the terminal device sends an uplink signal or uplink information to the base station, where the uplink information is carried on an uplink channel. To communicate with the base station, the terminal device needs to establish a wireless connection to a cell controlled by the base station. The cell that establishes the wireless connection to the terminal device is referred to as a serving cell of the terminal device. When communicating with the serving cell, the terminal device is further interfered with by a signal from a neighboring cell.

The core network in embodiments of this application may include a network device that processes and forwards signaling and data of a user. For example, the core network includes core network devices such as an access and mobility management function (access and mobility management function, AMF), a session management function (session management function, SMF), a user plane gateway, and a location management device. The user plane gateway may be a server that has functions such as mobility management, routing, and forwarding specific to user plane data. The user plane gateway, for example, a serving gateway (serving gateway, SGW), a packet data network gateway (packet data network gateway, PGW), or a user plane network element functional entity (user plane function, UPF), is generally located on a network side. The AMF and the SMF are equivalent to a mobility management entity (mobility management entity, MME) in a long term evolution (long term evolution, LTE) system. The AMF is mainly responsible for admission, and the SMF is mainly responsible for session management. Certainly, the core network may also include other network elements, which are not listed one by one herein.

The location management device has a positioning function. The location management device in embodiments of this application may include a location management function (location management function, LMF) or a location management component (location management component, LMC), or may be a local location management function (local location management function, LLMF) located in the network device, or may be a location server. This is not limited in embodiments of this application. For ease of description, the following embodiments are described by using an example in which the location management device is an LMF.

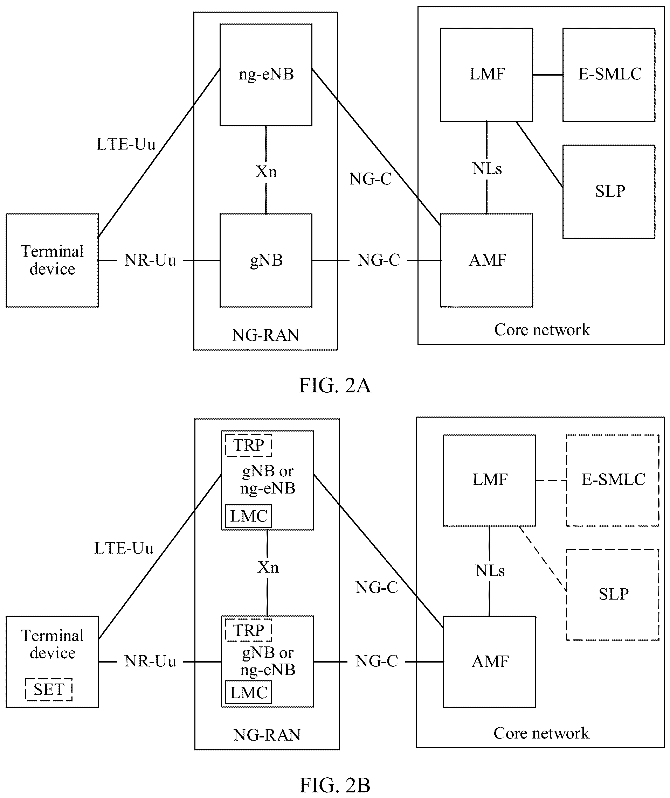

Based on the content shown in FIG. 1, **FIG. 2A** is an example of a diagram of an architecture of a communication system to which an embodiment of this application is applicable. The communication system is shown by using positioning architectures in LTE and NR Rel-16 as an example. As shown in FIG. 2A, involved network elements/modules mainly include three parts: a next generation radio access network (next generation radio access network, NG-RAN), a terminal device, and a core network.

The core network includes a location management function (location management function, LMF), an access and mobility management function (access and mobility management function, AMF), a service location protocol (service location protocol, SLP), an evolved serving mobile location center (evolved serving mobile location center, E-SMLC), and the like. A location server, namely, the location management function (location management function, LMF), is connected to the AMF, and the LMF and the AMF are connected through an NLs interface. UE communicates with a serving base station through a Uu link. An ng-eNB is an LTE base station, a gNB is an NR base station, and the base stations communicate with each other through an Xn interface. The base station communicates with the AMF through an NG-C interface. The access and mobility management function (Access and Mobility Management Function, AMF) is equivalent to a router for communication between the gNB and the LMF. The LMF implements location estimation of the UE. The AMF communicates with the LMF through an NLs interface. The LMF is responsible for supporting different types of location services related to the terminal device, including positioning the terminal device and transferring assistance data to the terminal device. The LMF may perform positioning calculation on the terminal device based on a measurement result of another network element. The AMF may receive a terminal device-related location service request from a 5th generation core network location service (5th generation core network location service, 5GC LCS) entity, or the AMF may start some location services on behalf of a specific terminal device, and forward the location service request to the LMF. After location information returned by the terminal device is obtained, the related location information is returned to the 5GC LCS entity.

The NG-RAN may include a next generation NodeB (next generation NodeB, gNB), a next generation evolved NodeB (next generation evolved NodeB, ng-eNB), and the like. The gNB and the ng-eNB are connected through an Xn interface, and the LMF and the ng-eNB/gNB are connected through an NG-C interface.

One or more network devices on an NG-RAN side configure a resource used to send a reference signal, and send the reference signal to the terminal device. The terminal device measures a downlink signal such as the reference signal, and feeds back a measurement result to the LMF, to support positioning. It should be understood that the reference signal is used for positioning, and may also be referred to as a positioning reference signal. Therefore, the positioning reference signal may be a PRS, a cell-common reference signal (common reference signal, CRS), a channel state information (channel state information, CSI)-RS, or the like.

A positioning method provided in embodiments of this application may be applied to various communication systems, for example, an LTE system, a 5th generation (5th generation, 5G) system such as NR, and a next generation communication system such as a 6G system. Certainly, the technical solutions in embodiments of this application may also be applied to another communication system, provided that the communication system has a positioning requirement for a terminal device. In addition, the communication system is further applicable to a future-oriented communication technology. The systems described in embodiments of this application are intended to describe the technical solutions in embodiments of this application more clearly, and constitute no limitation on the technical solutions provided in embodiments of this application. A person of ordinary skill in the art may learn that, with evolution of a network architecture, the technical solutions provided in embodiments of this application are also applicable to similar technical problems.

**FIG. 2B** shows a network architecture of another communication system to which an embodiment of this application is applicable. The communication system includes a core network, an NG-RAN, and a terminal device. The core network includes network elements/modules such as an LMF, an AMF, a secure user plane location (secure user plane location, SUPL) location platform (SUPL location platform, SLP), and an enhanced serving mobile location center (enhanced serving mobile location center, E-SMLC). The NG-RAN includes network elements/modules such as a gNB and an ng-eNB. For specific functions of the network elements/modules such as the LMF, the AMF, the SLP, the E-SMLC, the gNB, and the ng-eNB and connection relations between the network elements/modules, refer to descriptions of related parts in FIG. 2A above. Details are not described herein again.

A difference from FIG. 2A lies in that, in the network architecture shown in FIG. 2B, an LMC is added to the NG-RAN, and a specific deployment manner of the LMC is being disposed in a base station, for example, disposed in the gNB or the ng-eNB. In this network architecture, the LMC serves as an internal function of the base station. Therefore, no new interface needs to be introduced. The LMC may undertake some functions of the LMF. In this architecture, the gNB may not report a measurement result of a signal used for positioning to the LMF in the core network, thereby reducing signaling overheads and reducing a positioning delay.

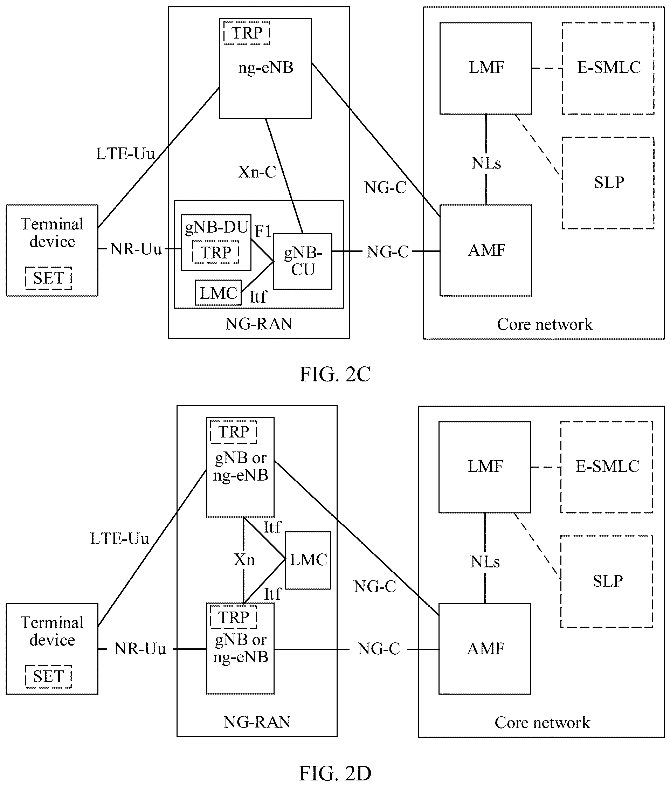

FIG. 2C shows a network architecture of another communication system to which an embodiment of this application is applicable. As shown in FIG. 2C, the communication system also includes a core network, an NG-RAN, and a terminal device. A difference from FIG. 2B lies in that an LMC in the network architecture shown in FIG. 2C serves as an independent logical node in the NG-RAN, and is connected to a base station through a new interface. For example, in FIG. 2C, the LMC is connected to a gNB-CU through an interface Itf.

**FIG. 2D** shows a network architecture of another communication system to which an embodiment of this application is applicable. As shown in FIG. 2D, the communication system also includes a core network, an NG-RAN, and a terminal device. An LMC serves as an independent logical node in the NG-RAN. A difference from FIG. 2C lies in that the LMC may be connected to a plurality of base stations through new interfaces in FIG. 2D. In FIG. 2D, an example in which the LMC is connected to two base stations is used. In a specific implementation, the LMC may alternatively be connected to more base stations.

It should be understood that FIG. 2A, FIG. 2B, FIG. 2C, and FIG. 2D are examples for describing the communication systems to which embodiments of this application are applicable, and do not specifically limit types, quantities, connection manners, and the like of network elements included in the communication systems to which this application is applicable. In addition, a network element/module shown by a dashed line in FIG. 2A, FIG. 2B, FIG. 2C, and FIG. 2D is not mandatory, and is optional. For example, the E-SMLC or the SLP is not mandatory. Alternatively, a network element/module shown by a dashed line is in another existence form. For example, the gNB or the ng-eNB is also referred to as a transmission reception point (transmission reception point, TRP) node in some embodiments, and the terminal device is referred to as an SUPL enabled terminal (SUPL enabled terminal, SET) in some embodiments, where SUPL is short for secure user plane location (secure user plane location, SUPL).

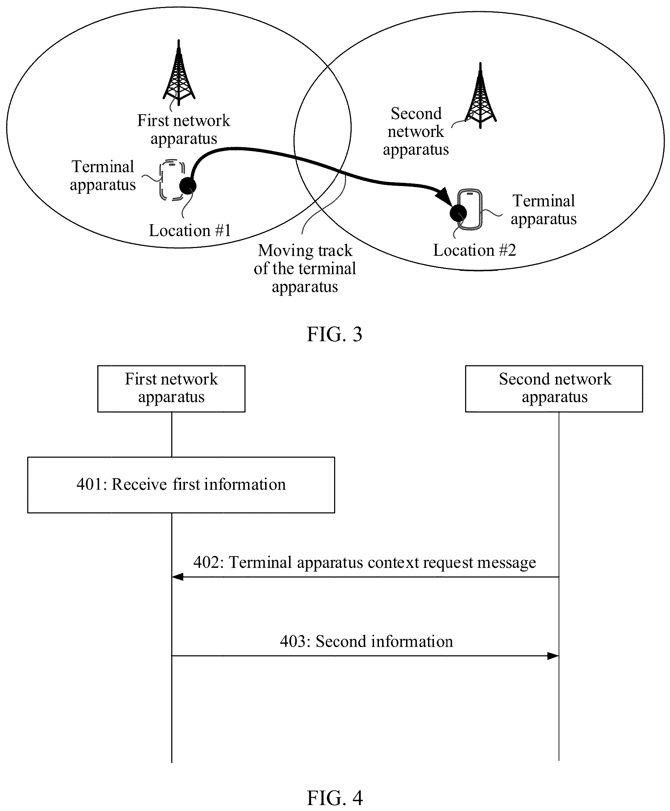

**FIG.** 3 is an example of a diagram of a network architecture of another communication system according to an embodiment of this application. As shown in FIG. 3, the communication system includes a first network apparatus, a terminal apparatus, and a second network apparatus. The first network apparatus and/or the second network apparatus in FIG. 3 may be the network device in FIG. 1, FIG. 2A, FIG. 2B, FIG. 2C, or FIG. 2D or a chip (system) in the network device. The terminal apparatus may be the terminal device shown in FIG. 1, FIG. 2A, FIG. 2B, FIG. 2C, or FIG. 2D or a chip (system) in the terminal.

With reference to FIG. 3, for example, when the terminal apparatus is at a location #1, the first network apparatus receives, from an LMF, some information used to configure a signal (for ease of description, an example in which a positioning reference signal is an SRS is used for description subsequently). For example, the first network apparatus receives, from the LMF, information of a requested SRS transmission characteristic, where the information of the requested SRS transmission characteristic includes SRS configuration information, for example, including a number of transmissions (for example, 100).

The terminal apparatus in an RRC idle state or an RRC inactive state moves from the location #1 to a location #2. The location #1 is within signal coverage of the first network apparatus, and the location #2 is within signal coverage of the second network apparatus. FIG. 3 shows an example of a moving track of the terminal apparatus. After the terminal apparatus moves to the signal coverage of the second network apparatus, when the terminal apparatus needs to update the SRS, the second network apparatus needs to reconfigure the SRS configuration information for the terminal apparatus. The second network apparatus may request, from the first network apparatus, to obtain context information used for positioning the terminal apparatus, and the first network apparatus may send, to the second network apparatus, the information of the requested SRS transmission characteristic that is received from the LMF, so that the second network apparatus configures the SRS configuration information for the terminal apparatus based on the information of the requested SRS transmission characteristic.

The number of transmissions included in the information of the requested SRS transmission characteristic is an initial number of transmissions that is configured by the LMF, for example, 100. Therefore, the second network apparatus still configures 100 periodic SRS transmissions for the terminal apparatus. However, the terminal apparatus may have performed some SRS transmissions (for example, the terminal apparatus has performed 10 periodic SRS transmissions within a time since the first network apparatus receives first information). If the terminal apparatus moves, the second network apparatus still requires the terminal apparatus to perform 100 periodic SRS transmissions again. As a result, a number of signal (for example, SRS) transmissions performed by the terminal apparatus is excessively large, and is greater than a number of initial signal periodicities configured by the LMF, causing a waste of resources.

Based on the foregoing problem, an embodiment of this application provides one possible implementation. In this implementation, the first network apparatus configures a transmission of a reference signal for the terminal apparatus (for example, configures a number of transmissions of the reference signal for the terminal apparatus) based on the first information, and the first network apparatus sends second information to the second network apparatus. The second network apparatus configures a transmission of the reference signal for the terminal apparatus (for example, configures a number of transmissions of the reference signal for the terminal apparatus) based on the second information. In this embodiment of this application, the number of transmissions of the reference signal that is determined based on the first information is referred to as a first number of transmissions, and the number of transmissions of the reference signal that is determined based on the second information is referred to as a second number of transmissions. The first number of transmissions is different from the second number of transmissions. For example, the second number of transmissions is a number of remaining transmissions of the terminal apparatus. This can reduce a case in which the terminal apparatus performs excessive reference signal transmissions, thereby reducing resources.

In addition, the information of the requested SRS transmission characteristic that is sent by the LMF to the first network apparatus further includes some information associated with a location of the terminal apparatus, for example, spatial relation information and/or path loss reference information. For example, the first network apparatus sends, to the second network apparatus, the spatial relation information and the path loss reference information that are received from the LMF, so that the second network apparatus configures the spatial relation information and the path loss reference information of the SRS for the terminal apparatus based on the information. Because the LMF configures the spatial relation information and the path loss reference information for the terminal apparatus based on a situation before the terminal apparatus moves and the second network apparatus needs to configure a transmission of the reference signal for the terminal apparatus, when the terminal apparatus has moved and the second network apparatus needs to configure a transmission of the reference signal for the terminal apparatus, the spatial relation information and the path loss reference information that are sent by the LMF to the first network apparatus are no longer applicable.

Based on this problem, an embodiment of this application provides several possible implementations. For example, the first network apparatus may delete, from the information of the requested SRS transmission characteristic, the spatial relation information and the path loss reference information that are received from the LMF. Therefore, the first apparatus no longer transmits the spatial relation information and the path loss reference information to the second network apparatus, thereby preventing the second network apparatus from configuring a transmission of the reference signal for the terminal apparatus (for example, configuring a spatial relation and a path loss of the reference signal for the terminal apparatus) based on expired spatial relation information and path loss reference information. For another example, the second network apparatus may re-determine the spatial relation information and the path loss reference information for the terminal apparatus (for example, may obtain the spatial relation information and the path loss reference information from the LMF or may determine the spatial relation information and the path loss reference information based on a measurement result), and then the second network apparatus configures a more proper reference signal parameter for the terminal apparatus based on the newly obtained spatial relation information and path loss reference information.

Based on the embodiments shown in FIG. 1, FIG. 2A, FIG. 2B, FIG. 2D, and FIG. 3 and the foregoing other content, FIG. 4 is an example of a schematic flowchart of a communication method according to an embodiment of this application. For ease of understanding, FIG. 4 is described from a perspective of interaction between apparatuses.

A terminal apparatus in **FIG**. **4** may be the terminal device shown in FIG. 1, FIG. 2A, FIG. 2B, FIG. 2D, and FIG. 3 or a chip (system) in the terminal. A first network apparatus and/or a second network apparatus in FIG. 4 may be the network device in FIG. 1, FIG. 2A, FIG. 2B, FIG. 2D, and FIG. 3 or a chip (system) in the network device. A location management apparatus in FIG. 4 may be the location management device in FIG. 1, FIG. 2A, FIG. 2B, FIG. 2D, and FIG. 3 or a chip (system) in the location management device. The location management device may include one or more of an LMF, an LMC, or an LLMF.

As shown in FIG. 4, the method includes the following steps.

**Step 401:** The first network apparatus receives first information.

The first information includes information used to configure a transmission of a reference signal of the terminal apparatus, and the reference signal is used to position the terminal device.

In step 401, the first network apparatus may receive the first information from the location management apparatus, or may receive the first information from another network apparatus. In the embodiment provided in FIG. 4, both the scenarios are applicable.

After receiving the first information, the first network apparatus may configure a transmission of the reference signal for the terminal apparatus based on the first information. In this embodiment of this application, that the first network apparatus configures a transmission of the reference signal may be understood as that the first network apparatus configures some information of the reference signal, for example, one or more of a number of transmissions, a path loss, a spatial relation, a time domain resource, or a frequency domain resource. The information of the reference signal that is configured by the first network apparatus may be partially sent to the terminal apparatus and partially not sent to the terminal apparatus, or all of the information may be sent to the terminal apparatus. For example, the first network apparatus may not send information of a number of transmissions to the terminal apparatus, but send one or more of a path loss, a spatial relation, a time domain resource, a frequency domain resource, or the like to the terminal apparatus. The reference signal is used to position the terminal apparatus. For related descriptions of the reference signal, refer to the foregoing descriptions. Details are not described again.

After receiving the first information, the first network apparatus may configure a transmission of the reference signal for the terminal apparatus. The first network apparatus may configure a transmission of the reference signal for the terminal apparatus for a plurality of causes. For example, the terminal apparatus is located within coverage of the first network apparatus. For another example, the terminal apparatus is located outside the coverage of the first network apparatus, but within coverage of a cell in an area (for example, a tracking area) corresponding to the first network apparatus. For another example, quality of a signal received from the first network apparatus at a current location of the terminal apparatus is higher than quality of a signal from another network apparatus (for example, the second network apparatus) (at this location, the signal from the second network apparatus may be received, or the signal from the second network apparatus may not be received). For another example, the terminal apparatus camps on a cell of the first network apparatus through cell re-selection at this location.

The first network apparatus may configure a transmission of the reference signal of the terminal apparatus based on a number of transmissions of the reference signal that is determined based on the first information. Alternatively, it may be understood that the first network apparatus configures a transmission of the reference signal of the terminal apparatus based on the first information.

For distinguishing, in this embodiment of this application, the number of transmissions of the reference signal that is determined by the first network apparatus based on the first information is referred to as a first number of transmissions. When the reference signal is periodically transmitted, the first number of transmissions is a number of periodicities of the reference signal that is configured by the first network apparatus, which may also be referred to as a number of periodic transmissions. For example, a number of periodic transmissions of the reference signal that is configured by the first network apparatus for the terminal apparatus based on the first information is a number of transmissions that is determined based on the first information.

**Step 402:** The second network apparatus sends a terminal apparatus context request message to the first network apparatus.

Correspondingly, the first network apparatus receives the terminal apparatus context request message from the second network apparatus.

After the second network apparatus sends the terminal apparatus context request message to the first network apparatus, the second network apparatus needs to configure a transmission of the reference signal for the terminal apparatus, for example, configure one or more of a number of transmissions, a path loss, a spatial relation, a time domain resource, or a frequency domain resource of the reference signal for the terminal apparatus. The second network apparatus may configure a transmission of the reference signal for the terminal apparatus for a plurality of causes. For example, the terminal apparatus moves, and the second network apparatus needs to configure a transmission of the reference signal for the terminal apparatus after the movement. For another example, the terminal apparatus moves to coverage of the second network apparatus. For another example, the terminal apparatus is located outside the coverage of the second network apparatus, but moves to coverage of a cell in an area (for example, a tracking area) corresponding to the second network apparatus. For another example, quality of a signal received by the terminal apparatus from the second network apparatus at a location after the movement is higher than quality of a signal from another network apparatus (for example, the first network apparatus) (at this location, the signal from the first network apparatus may be received, or the signal from the first network apparatus may not be received). For another example, the terminal apparatus camps on a cell of the second network apparatus through cell re-selection at this location.

Before step 402, the terminal apparatus may send an RRC connection resume request message to the second network apparatus, where the message is used to request a reference signal configuration or request a reference signal configuration update. The RRC connection resume request message may be an RRC resume request (RRC resume request) or an RRC setup request (RRC setup request).

The terminal apparatus sends the RRC connection resume request message to the second network apparatus. After receiving the message, the second network apparatus requests a context of the terminal apparatus from the first network apparatus.

In another possible implementation, the terminal apparatus context request message further includes reference signal update cause information. For example, the terminal apparatus context request message includes a cause value, and the cause value may be a reference signal update, a reference signal request, or the like. For example, if the reference signal is an SRS, the cause value included in the terminal apparatus context request message is an SRS update (SRS update), an SRS request (request), or the like. After receiving the terminal apparatus context request message, the first network apparatus determines that the terminal apparatus context request message carries a reference signal update cause value, and then may feed back, to the second network apparatus, some information (the information may be referred to as assistance information or reference information) used to assist the second network apparatus in configuring a transmission of the reference signal for the terminal apparatus. Therefore, in some cases, for example, after the second network apparatus receives the terminal apparatus context request message from the first network apparatus, the second network apparatus may determine not to transfer the context of the terminal. In this case, the second network apparatus may send only a positioning context of the terminal apparatus to the first network apparatus based on the requested cause value, to avoid a failure of the terminal device in requesting to update an SRS configuration.

**Step 403:** The first network apparatus sends second information to the second network apparatus.

Correspondingly, the second network apparatus receives the second information from the first network apparatus.

The second information is determined based on the first information. The second information includes information used to configure a transmission of the reference signal of the terminal apparatus. In this embodiment of this application, that the first network apparatus configures a transmission of the reference signal may be understood as that the first network apparatus configures some information of the reference signal, for example, one or more of a number of transmissions, a path loss, a spatial relation, a time domain resource, or a frequency domain resource. The information of the reference signal that is configured by the first network apparatus may be partially sent to the terminal apparatus and partially not sent to the terminal apparatus, or all of the information may be sent to the terminal apparatus. For example, the first network apparatus may not send information of a number of transmissions to the terminal apparatus, but send one or more of a path loss, a spatial relation, a time domain resource, a frequency domain resource, or the like to the terminal apparatus.

The second information may be used by the second network apparatus to configure a transmission of the reference signal of the terminal apparatus based on a number of transmissions of the reference signal that is determined based on the second information. After the second network apparatus receives the second information from the first network apparatus, the second network apparatus configures a transmission of the reference signal of the terminal apparatus based on the number of transmissions of the reference signal that is determined based on the second information. Alternatively, it may be understood that the second information is used by the second network apparatus to configure a transmission of the terminal apparatus based on the second information. After receiving the second information, the second network apparatus configures a transmission of the reference signal of the terminal apparatus based on the second information.

For distinguishing, in this embodiment of this application, the number of transmissions of the reference signal that is determined by the second network apparatus based on the second information is referred to as a second number of transmissions. When the reference signal is periodically transmitted, the second number of transmissions is a number of periodicities of the reference signal that is configured by the second network apparatus, which may also be referred to as a number of periodic transmissions. For example, a number of periodic transmissions of the reference signal that is configured by the second network apparatus for the terminal apparatus based on the second information is a number of transmissions that is determined based on the second information.

In this embodiment of this application, the second number of transmissions is a number of remaining transmissions of the reference signal. Alternatively, the second number of transmissions may be understood as a number of transmissions of the reference signal that still need to be performed by the terminal apparatus, a number of transmissions of the reference signal that are not performed by the terminal apparatus, or the like.

For example, after the first network apparatus receives the first information and before the first network apparatus receives the terminal apparatus context request message from the second network apparatus, the terminal apparatus performs K₀ transmissions of the reference signal in this time period. In this time period, the terminal apparatus may be located within the coverage of the first network apparatus, or may be located outside the coverage of the first network apparatus (for example, may be located in a cell in the tracking area of the first network apparatus). The first number of transmissions of the reference signal that is determined based on the first information is denoted as K₁. The second number of transmissions of the reference signal that is determined based on the second information is denoted as K₂. K₁ is different from K₂. For example, K₂ may be equal to a difference between K₁ and K₀.

It can be learned that the first network apparatus sends the second information instead of the first information to the second network apparatus, and the second number of transmissions that is determined by the second network apparatus based on the second information is different from the first number of transmissions, and is a number of remaining transmissions of the terminal apparatus. This solution can prevent the terminal apparatus as far as possible from performing excessive reference signal transmissions, thereby wasting fewer resources.

In this embodiment of this application, when a network apparatus determines that a number of transmissions (or referred to as a number of periodicities) of the reference signal that are performed by the terminal apparatus reaches a number required by the network apparatus, the network apparatus may indicate the terminal apparatus not to continue to transmit the reference signal. For example, the second network apparatus determines the second number of transmissions of the reference signal based on the second information, and when a number of transmissions performed by the terminal apparatus reaches the second number of transmissions, the second network apparatus sends, to the terminal apparatus, information indicating that the terminal apparatus does not need to transmit the reference signal. For example, the second network apparatus may deactivate information of the reference signal that is configured by the second network apparatus for the terminal apparatus. In another possible implementation, the second network apparatus may send information of the second number of transmissions to the terminal apparatus; and when determining that a number of transmissions reaches the second number of transmissions, the terminal apparatus may stop transmitting the reference signal. This can reduce power consumption of the terminal apparatus.

The following describes two possible implementations by using Implementation A1 and Implementation A2 as examples. In Implementation A1, the second information may include timestamp information, and the second network apparatus may determine the second number of transmissions based on the timestamp information. In Implementation A2, the second information may include the information of the second number of transmissions, so that the second network apparatus directly determines the second number of transmissions based on the information of the second number of transmissions in the second information.

**Implementation A1:** The second information includes information of a first timestamp and information of a third number of transmissions.

The third number of transmissions may be a number of transmissions of the reference signal that is requested by the location management apparatus.

In a possible implementation, the information of the first timestamp is information of a timestamp associated with the third number of transmissions. The second network apparatus may estimate, with reference to the first timestamp and a current time point, a number of transmissions of the reference signal that have been performed by the terminal apparatus. In addition, because the information of the first timestamp is associated with the third number of transmissions, the second network apparatus may calculate a number of remaining transmissions with reference to the third number of transmissions and the estimated number of transmissions of the reference signal that have been performed by the terminal apparatus, and then may configure a number of periodic transmissions of the terminal apparatus as the number of remaining transmissions. This can prevent the terminal apparatus from performing excessive reference signal transmissions, thereby wasting fewer resources.

For example, the information of the first timestamp may indicate at least one of the following content:
a time point at which the information of the third number of transmissions is sent from the location management apparatus;
a time point at which the information of the third number of transmissions arrives at a third network apparatus, where the third network apparatus is a network apparatus that receives the information of the third number of transmissions from the location management apparatus, and the third network apparatus is the same as or different from the first network apparatus; or
a time point at which the third network apparatus sends configuration information of the reference signal to the terminal apparatus based on the information of the third number of transmissions.

In another possible implementation, the second information includes the information of the first timestamp, where the information of the first timestamp indicates a time point at which the terminal apparatus starts to send the reference signal or a time point at which the third network apparatus sends the configuration information of the reference signal to the terminal apparatus.

After receiving the information of the first timestamp, the second network apparatus may calculate, with reference to a current time point, a time length between the two time points, determine, based on period duration of the reference signal, a number of transmissions (or referred to as a number of periodicities) of the reference signal that have been performed by the terminal apparatus, and then determine, with reference to the information of the third number of transmissions, a number of remaining transmissions (or referred to as a number of periodic transmissions) of the reference signal that still need to be performed by the terminal apparatus. For example, the second network apparatus may use a difference between the third number of transmissions and a number of transmissions of the reference signal that have been performed by the terminal apparatus after the third network apparatus receives the information of the third number of transmissions as the number of remaining transmissions of the reference signal that still need to be performed by the terminal apparatus.

The information of the first timestamp may be determined by the first network apparatus, or may be received from another device, for example, may be received from the terminal apparatus, the location management apparatus, or another network apparatus. For example, the third network apparatus is the first network apparatus, and the first number of transmissions is the third number of transmissions; and the first network apparatus receives the first information from the location management apparatus, and then the first network apparatus uses a time point at which the first information is received as the first timestamp, or the first network apparatus uses a time point at which the information of the reference signal is sent to the terminal apparatus as a time point indicated by the first timestamp. For another example, the information of the first timestamp may be determined by the terminal apparatus (for example, the terminal apparatus uses a time point at which the reference signal starts to be sent as the first timestamp), and then the terminal apparatus sends the information of the first timestamp to the first network apparatus. For another example, the information of the first timestamp is carried in the first information, and the first network apparatus receives the information of the first timestamp from the location management apparatus or another network apparatus. The first network apparatus includes the information of the first timestamp in the second information, and sends the second information to the second network apparatus. In this implementation, the first information may be information sent by the location management apparatus, or may be information sent not by the location management apparatus (but by another network apparatus). When the first information is information sent by the location management apparatus, the first information may be, for example, a positioning information request. For example, the location management apparatus determines (for example, generates) the positioning information request, the location management apparatus sends the positioning information request to the first network apparatus, where the positioning information request includes the information of the first timestamp and the information of the third number of transmissions. In this case, the first network apparatus may be considered as the third network apparatus. This solution can reduce workload of the first network apparatus.

**Implementation A2:** The second information includes the information of the second number of transmissions.

In this embodiment of this application, before sending the second information, the first network apparatus may further obtain the second information. The second network apparatus obtains the second information in a plurality of manners. For example, the second network apparatus may generate the second information. For example, the second network apparatus calculates the second number of transmissions, and then includes, in the second information, information indicating the second number of transmissions.

In another possible implementation, the second network apparatus may request the second information (or request some parameters in the second information) from another apparatus (for example, the location management apparatus). For example, the second network apparatus sends a request to the location management apparatus; after receiving the request, the location management apparatus determines the second number of transmissions, and sends, to the first network apparatus, the information indicating the second number of transmissions; and then the first network apparatus sends the second information with reference to the information indicating the second number of transmissions, for example, may directly include, in the second information, the received information indicating the second number of transmissions. The information that is sent by the location management apparatus to the first network apparatus and that indicates the second number of transmissions may be the same as or different from the information that is sent by the first network apparatus to the second network apparatus and that indicates the second number of transmissions. For example, the information that is sent by the location management apparatus to the first network apparatus and that indicates the second number of transmissions may be one second number of transmissions or one difference (the difference is, for example, a difference between the first number of transmissions and the second number of transmissions). If the first network apparatus receives the difference, the first network apparatus may send the difference and the first number of transmissions to the second network apparatus, so that the second network apparatus calculates the second number of transmissions. Alternatively, the first network apparatus may calculate the second number of transmissions with reference to the difference and the first number of transmissions, and then send the second number of transmissions to the second network apparatus.

In a possible implementation, the first network apparatus may perform some operations on the first information, to obtain the second information. For example, the second information is obtained by the first network apparatus by performing at least the following operation on the first information: modifying information of the first number of transmissions in the first information to the information of the second number of transmissions. The first network apparatus may alternatively perform another operation on the first information. Details are not described herein. This solution is relatively simple without additional information, so that resource overheads can be reduced.

Examples of two manners of calculating the second number of transmissions are described below by using Example A2.1 and Example A2.2. The second number of transmissions may be calculated by the first network apparatus, or may be calculated by another apparatus (for example, the location management apparatus) and then sent to the first network apparatus.

**Example A2.1:** The second number of transmissions is determined based on the first number of transmissions and a number of transmissions of the reference signal that are performed by the terminal apparatus after the first network apparatus receives the first information.

For example, the second number of transmissions is a difference between the first number of transmissions and the number of transmissions of the reference signal that are performed by the terminal apparatus after the first network apparatus receives the first information.

For example, the first number of transmissions of the reference signal that is determined based on the first information is 100. In a period of time from receiving the first information by the first network apparatus to receiving the terminal apparatus context request message by the first network apparatus, the terminal apparatus has performed 10 transmissions of the reference signal (that is, the terminal apparatus has experienced 10 transmission periodicities of the reference signal). Therefore, 90 (a difference between 100 and 10) is used as the second number of transmissions, and the second number of transmissions is carried in the second information.

**Example A2.2:** The second number of transmissions is determined based on the third number of transmissions and a number of transmissions (or referred to as periodic transmissions) of the reference signal that have been performed by the terminal apparatus. The number of transmissions (or referred to as periodic transmissions) of the reference signal that have been performed by the terminal apparatus is a total number of transmissions of the reference signal that are performed by the terminal apparatus. For example, the first network apparatus (or the location management apparatus) may obtain the first timestamp, calculate, based on the first timestamp and a current time point, a time length between the two time points, determine, based on period duration of the reference signal, a number of transmissions (or referred to as a number of periodicities) of the reference signal that have been performed by the terminal apparatus, and then determine, with reference to the information of the third number of transmissions, a number of remaining transmissions (or referred to as a number of periodic transmissions) of the reference signal that still need to be performed by the terminal apparatus. For example, the terminal apparatus may use a difference between the third number of transmissions and the number of transmissions of the reference signal that have been performed by the terminal apparatus as the second number of transmissions.

For example, when the first network apparatus receives the terminal apparatus context request message of the second network device, the first network apparatus (or the location management apparatus) estimates, based on duration between a current time point and the time point indicated by the obtained first timestamp and with reference to the period duration of the reference signal, a number of transmissions of the reference signal that have been performed by the terminal apparatus (for example, 20, that is, the terminal apparatus has experienced 20 transmission periodicities of the reference signal, for example, the first network apparatus may use a quotient between the duration between the current time point and the time point indicated by the obtained first timestamp and duration of one period of the reference signal as the estimated number of transmissions of the reference signal that have been performed by the terminal apparatus). If the third number of transmissions that is obtained by the first network apparatus is, for example, 110, the first network apparatus may use 90 (a difference between 110 and 20) as the second number of transmissions, and include the second number of transmissions in the second information.

In Implementation A2, the first network apparatus (or the location management apparatus) calculates the second number of transmissions in advance, so that a calculation amount of the second network apparatus can be reduced. For ease of understanding, some content in this embodiment of this application is described by using an example in which the first network apparatus calculates the second number of transmissions, but this does not indicate that the second number of transmissions in this embodiment of this application is definitely calculated by the first network apparatus.

In this embodiment of this application, some information used when the first network apparatus configures a transmission of the reference signal for the terminal apparatus is associated with a location of the terminal apparatus. If the terminal apparatus moves, the information is no longer applicable. For this problem, this embodiment of this application provides the following two implementations B1 and B2 for example description. In Implementation B1, the second network apparatus may re-request, from the location management apparatus, some information associated with the location of the terminal apparatus, and configure a transmission of the reference signal for the terminal apparatus based on the re-requested information. In Implementation B2, the second network apparatus may configure a transmission of the reference signal for the terminal apparatus based on some measurement results.

**Implementation B1:** The second network apparatus requests, from the location management apparatus, information (spatial relation information and/or path loss reference information) associated with the location of the terminal apparatus.

In Implementation B1, the second network apparatus sends a first message to the location management apparatus. In a possible implementation, the second network apparatus may send the first message after receiving the second information. The second information may include or not include the information associated with the location of the terminal apparatus.

Correspondingly, the location management apparatus receives the first message from the second network apparatus. The first message is used to request to configure a transmission of the reference signal, for example, update the information associated with the location of the terminal apparatus. The information may include, for example, the path loss reference information (which may also be understood as updated path loss reference information) and/or spatial relation information (which may also be understood as updated spatial relation information). The location management apparatus sends fourth information to the second network apparatus. Correspondingly, the second network apparatus receives the fourth information from the location management apparatus. A message carrying the fourth information may be understood as a response message for the first message. The fourth information may include path loss reference information (which may also be understood as updated path loss reference information), spatial relation information (which may also be understood as updated spatial relation information), and/or the like. The second network apparatus sends configuration information of the reference signal to the terminal apparatus, where the configuration information of the reference signal is determined based on the fourth information and the second information.

The second network apparatus may send the first message before step 402 or after step 402. The first message may be, for example, a configuration request (configuration required). The message carrying the fourth information may include, for example, a location dependent parameter characteristic (location dependent parameters characteristic) or an SRS related parameter (SRS related parameter).

In a possible implementation, when a transmission of the reference signal that is configured by the second network apparatus for the terminal apparatus is valid in a plurality of cells (the plurality of cells are, for example, a validity area/positioning area (positioning area)), the first message may further carry information of the area in which the transmission of the reference signal is valid (the area information may be, for example, a cell list, and the cell list includes the plurality of cells, for example, information such as a physical cell identifier (physical cell identifier, PCI) and an NR cell global identifier (NR cell global identifier, NGCI) of each cell). The location management apparatus may recommend one or more sets of information applicable to the plurality of cells (each set of information may include path loss reference information and/or spatial relation information) to the second network apparatus based on existing information (for example, information such as previous measurement value information and a moving track of the terminal apparatus).

Because the second network apparatus may re-determine spatial relation information and path loss reference information for the terminal apparatus, the second network apparatus configures a more proper reference signal parameter for the terminal apparatus based on the newly obtained spatial relation information and path loss reference information.

In this embodiment of this application, information of a transmission of the reference signal that is configured by the first network apparatus or the second network apparatus for the terminal apparatus may also be referred to as configuration information of the reference signal, a resource of the reference signal, resource information of the reference signal, or the like.

**Implementation B2:** The second network apparatus determines, for the terminal apparatus based on a measurement result, information (spatial relation information and/or path loss reference information) associated with the location of the terminal apparatus.

In Implementation B2, when the terminal apparatus camps on the second network device, the terminal apparatus sends measurement information to the second network apparatus. Correspondingly, the second network apparatus receives the measurement information from the terminal apparatus. In this embodiment of this application, the measurement information may be, for example, RRM measurement information, and the RRM measurement information may include a measurement value such as reference signal received power (reference signal received power, RSRP) or reference signal received quality (reference signal received quality, RSRQ) of the reference signal (for example, an SSB) measured by the terminal device. That the second network apparatus configures a transmission of the reference signal for the terminal apparatus based on measurement information may include: The second network apparatus configures path loss reference information and/or spatial relation information of the reference signal for the terminal apparatus based on the measurement information. It may also be understood that the second network apparatus sends configuration information of the reference signal to the terminal apparatus, where the configuration information of the reference signal is determined based on the measurement information and the second information.

For example, in a scenario in which a small data transmission (small data transmission, SDT) is supported, the terminal apparatus may report measurement information to the second network apparatus through the SDT, and the second network apparatus may configure a transmission of the reference signal for the terminal apparatus based on the RRM measurement information reported by the terminal apparatus, for example, the second network apparatus configures path loss reference information and/or spatial relation information of the reference signal for the terminal apparatus.

Because the second network apparatus may reconfigure the spatial relation information and the path loss reference information for the terminal apparatus based on the measurement information reported by the terminal apparatus, the second network apparatus may configure a more proper reference signal parameter for the terminal apparatus.

Implementation B1 and Implementation B2 provided in this embodiment of this application may be separately used, or may be used in combination with Implementation A1 and Implementation A2. For example, Implementation B1 and Implementation A1 may be used in combination, or Implementation B2 and Implementation A1 may be used in combination, or Implementation B1 and Implementation A2 may be used in combination, or Implementation B2 and Implementation A2 may be used in combination.

In a possible implementation, the second information sent by the first network apparatus to the second network apparatus may not include the information associated with the location of the terminal apparatus, or may include the information associated with the location of the terminal apparatus. The following separately uses Implementation C1 and Implementation C2 for description.

**Implementation C1:** The second information may not include the information associated with the location of the terminal apparatus.

In Implementation C1, for example, the first information includes preset information, there is an association relationship between the preset information and the location of the terminal apparatus, and the second information does not include the preset information. The preset information includes, for example, path loss reference information (path loss reference information) and/or spatial relation information (spatial relation information).

In a possible implementation, the preset information may further include more information. For example, when there is an association relationship between spatial relation information and SSB information (SSB information) (for example, the spatial relation includes the SSB information, or the spatial relation information is indicated by the SSB information), the second information may not include the SSB information, so that an amount of information that needs to be transmitted can be further reduced, thereby reducing resources. This can prevent the second network apparatus from configuring a transmission of the reference signal for the terminal apparatus based on improper information.

In a possible implementation, the first network apparatus may perform some operations on the first information, to obtain the second information. For example, the second information is obtained by the first network apparatus by performing at least the following operation on the first information: deleting the preset information included in the first information. This can reduce resource overheads.

Implementation C1 may be combined with Implementation B1, or may be combined with Implementation B2. For example, the second information delivered by the first network apparatus does not include the preset information (the preset information includes the path loss reference information and/or the spatial relation information), and the second network apparatus may reconfigure relatively proper path loss reference information and/or spatial relation information for the terminal apparatus by using Implementation B1 (re-requesting from the LMF) or Implementation B2 (based on the RRM measurement information reported by the terminal apparatus).

**Implementation C2:** The second information may include the information associated with the location of the terminal apparatus.

In Implementation C2, for example, the first information includes preset information (the preset information includes path loss reference information and/or spatial relation information). In this implementation, the second network apparatus may ignore the preset information delivered by the first network apparatus. In other words, although the second network apparatus receives the preset information from the first network apparatus, the second network apparatus does not configure the path loss reference information and/or the spatial relation information for the reference signal of the terminal apparatus based on the preset information from the first network apparatus. This can prevent the second network apparatus from configuring improper path loss reference information and/or spatial relation information for the terminal apparatus.

In a possible implementation, Implementation C2 may alternatively be combined with Implementation B1, or may be combined with Implementation B2. For example, although the second information delivered by the first network apparatus includes the preset information, the second network apparatus does not configure the path loss reference information and/or the spatial relation information for the reference signal of the terminal apparatus based on the preset information from the first network apparatus, and the second network apparatus may reconfigure relatively proper path loss reference information and/or spatial relation information for the terminal apparatus by using Implementation B1 (re-requesting from the LMF) or Implementation B2 (based on the RRM measurement information reported by the terminal apparatus).

In step 401, the first network apparatus may receive the first information from the location management apparatus, or the first network apparatus may receive the first information from another network apparatus.

For example, the location management apparatus sends a positioning information request to a network apparatus #1, where the positioning information request includes positioning information #1, and the positioning information #1 is used to configure a transmission of the reference signal of the terminal apparatus; and the network apparatus #1 configures a transmission of the reference signal for the terminal apparatus based on the positioning information #1, for example, the network apparatus #1 configures information #1 of the reference signal for the terminal apparatus based on the positioning information #1.

Then, the terminal apparatus moves from coverage of the network apparatus #1 to coverage of a network apparatus #2, the network apparatus #2 may request context information of the terminal apparatus from the network apparatus #1, the network apparatus #1 may send positioning information #2 to the network apparatus #2, and the network apparatus #2 may configure a transmission of the reference signal for the terminal apparatus based on at least the positioning information #2, for example, the network apparatus #2 configures information #2 of the reference signal for the terminal apparatus based on the positioning information #2.

Then, the terminal apparatus may further move from the coverage of the network apparatus #2 to coverage of a network apparatus #3, the network apparatus #3 may request context information of the terminal apparatus from the network apparatus #2, the network apparatus #2 may send positioning information #3 to the network apparatus #3, and the network apparatus #3 may configure a transmission of the reference signal for the terminal apparatus based on at least the positioning information #3, for example, the network apparatus #3 configures information #3 of the reference signal for the terminal apparatus based on the positioning information #3.

In this embodiment of this application, the terminal apparatus may further continue to move, and the first network apparatus and the second network apparatus may be two network apparatuses in a process in which the terminal apparatus moves. For example, the first network apparatus may be the network apparatus #1 in the foregoing example, and the second network apparatus may be the network apparatus #2 in the foregoing example. In this case, the first information is the positioning information #1 (or the positioning information request) received by the network apparatus #1 from the location management apparatus, and the second information is the positioning information #2. For another example, the first network apparatus may be the network apparatus #2 in the foregoing example, the second network apparatus may be the network apparatus #3 in the foregoing example, the first information may be the positioning information #2, and the second information is the positioning information #3.

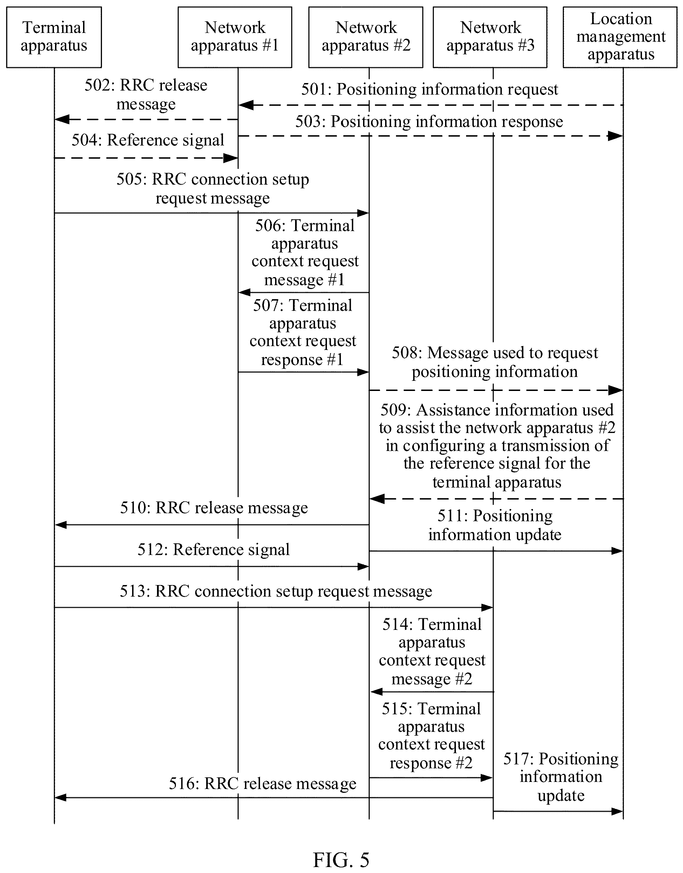

With reference to the foregoing examples, based on the embodiments shown in FIG. 1, FIG. 2A, FIG. 2B, FIG. 2D, FIG. 3, and FIG. 4 and the foregoing other content, FIG. 5 is an example of a schematic flowchart of a communication method according to an embodiment of this application.

As shown in FIG. 5, the method includes the following steps.

**Step 501:** A location management apparatus sends a positioning information request to a network apparatus #1.

Correspondingly, the network apparatus #1 receives the positioning information request.

Before sending the positioning information request, the location management apparatus may first obtain capability information of a terminal apparatus. The capability information of the terminal apparatus is content such as a positioning technology supported by the terminal apparatus. The positioning information request may be a positioning information request. The positioning information request is used to request the network apparatus #1 to configure a transmission of a reference signal for the terminal apparatus, for example, request the network apparatus #1 to configure a resource of the reference signal for the terminal apparatus, or configure some parameters of the reference signal, for example, path loss reference information and/or spatial relation information. The network apparatus #1 configures information #1 of the reference signal for the terminal apparatus based on positioning information #1. Further, the network apparatus #1 sends the information #1 of the reference signal to the terminal apparatus, for example, by performing step 502 below.

The positioning information request may carry some information used to assist the network apparatus #1 in configuring a transmission of the reference signal for the terminal apparatus. For distinguishing, the information that is carried in the positioning information request and that is used to assist the network apparatus #1 in configuring the reference signal for the terminal apparatus is referred to as the positioning information #1. In another possible implementation, the positioning information #1 may include one information element. For example, the positioning information #1 includes a requested SRS transmission characteristic (requested SRS transmission characteristic) #1.

The following describes the requested SRS transmission characteristic (requested SRS transmission characteristic) by using information D1. In a possible implementation, the positioning information #1 may further include one or more of the information D1, information D2, information D3, and information D4, which are separately described below.

### Information D1: Requested SRS transmission characteristic (requested SRS transmission characteristic).

For example, the requested SRS transmission characteristic may include one or more of the following information D1.1, information D1.2, information D1.3, information D1.4, information D1.5, and information D1.6.

### Information D1.1: Information of a number of transmissions of the reference signal.

When the reference signal is periodically transmitted, the information of the number of transmissions of the reference signal may be understood as a number of periodic transmissions of the reference signal, or may be understood as a number of execution periodicities of the reference signal, which may be written as a number of periodic transmissions in English.

If the terminal apparatus is in an RRC idle state or inactive state, after the terminal apparatus performs a required number of transmissions of the reference signal, a network apparatus may control the terminal apparatus to stop transmitting the reference signal. If the terminal apparatus is in an RRC connected state, after the terminal apparatus performs a required number of transmissions of the reference signal, the network apparatus may release the terminal apparatus.

### Information D1.2: Resource type (resource type).

The resource type may include, for example, a periodic type, an aperiodic type, or a semi-persistent (semi-persistent) type.

### Information D1.3: Bandwidth (bandwidth).

The bandwidth may include, for example, a bandwidth requirement for the reference signal.

### Information D1.4: SRS resource set list (SRS resource set list).

The SRS resource set list may include, for example, one or more resource sets, and a reference signal requirement corresponding to each resource set. The SRS resource set list may include, for example, the following information D1.4.1, information D1.4.2, information D1.4.3, and information D1.4.4.

### Information D1.4.1: Number of SRS resources included in each resource set (number of SRS resources per set).

### Information D1.4.2: Periodicity (periodicity) value.

### Information D1.4.3: Spatial relation information (spatial relation information).

The spatial relation information may also be understood as a requirement for a spatial relation of the reference signal, for example, a beam direction of the reference signal sent by the terminal apparatus. The spatial relation information may be indicated, for example, by using a specific reference signal, for example, an SSB index (index), or a resource identifier of a CSI-RS, a PRS, or an SRS.

### Information D1.4.4: Path loss reference information (path loss reference information).

The path loss reference information may be used to calculate power of the reference signal (for example, an SRS) sent by the terminal apparatus. The path loss reference information may be indicated by using a specific reference signal. The terminal device measures the specific reference signal (for example, an SSB or a PRS), and calculates, according to a rule, a path loss of a reference signal (for example, an SRS) sent by the terminal apparatus.

In an uplink positioning process, because a plurality of network apparatuses are required to measure the reference signal (for example, the SRS) sent by the terminal apparatus, the positioning information #1 may include spatial relation information and path loss reference information of a servering cell, and may further include spatial relation information and path loss reference information of a neighboring cell.

### Information D1.5: SSB information (SSB Information).

In a possible implementation, the SSB information may be a part of the spatial relation information. For example, the spatial relation information may be indicated by using the SSB information.

### Information D1.6: Reference signal carrier frequency.

The reference signal frequency may include, for example, a frequency requirement for a reference signal that needs to be transmitted by the terminal apparatus. For example, the reference signal is an SRS, and the reference signal frequency may be an SRS frequency.

### Information D2: Transmission identity.

In the transmission identity (NRPPa transaction ID), ID is short for identity (identity). The information may be used by the location management apparatus to identify messages belonging to a same procedure.

### Information D3: Terminal reporting information (UE Reporting Information).

The terminal reporting information may include information such as a time interval and an estimated data amount that are reported by the terminal. The information element may be used for positioning (for example, downlink positioning). A first network apparatus may refer to the information when an SDT resource is configured for the first network apparatus.

### Information D4: Information of a first timestamp.

The information D4 may be in the requested SRS transmission characteristic, or may be outside the requested SRS transmission characteristic. In another possible implementation, the positioning information #1 may not need to include the information D4. In this case, if the first network apparatus needs to send the information of the first timestamp to a second network apparatus, the information of the first timestamp may be generated by the first network apparatus, or may be obtained from another network apparatus. For detailed content, refer to subsequent descriptions. Details are not described first.

**Step 502:** The network apparatus #1 sends an RRC release message to the terminal apparatus.

Correspondingly, the terminal apparatus receives the RRC release message from the network apparatus #1.

The network apparatus #1 may include, in the RRC release message, the information #1 of the reference signal that is configured for the terminal apparatus, and send the information #1 to the terminal apparatus by using the RRC release message.

**Step 503:** The network apparatus #1 sends a positioning information response to the location management apparatus.

Correspondingly, the location management apparatus receives the positioning information response.

The positioning information response may be a positioning information response. The positioning information response may include the information #1 of the reference signal that is configured by the network apparatus #1 for the terminal apparatus.

**Step 504:** The terminal apparatus sends the reference signal.

After receiving the information #1 of the reference signal, the terminal apparatus needs to send the reference signal based on the information #1 of the reference signal, for example, send the reference signal on a resource configured in the information #1 of the reference signal. A type of the reference signal is the same as a type of the reference signal that is required by the information #1 of the reference signal.

In this embodiment of this application, the location management apparatus may alternatively select a network apparatus used for measurement, and send a measurement request (the measurement request is, for example, an NRPPa measurement request) to one or more selected network apparatuses (the one or more network apparatuses may include the network apparatus #1, or may not include the network apparatus #1), where the measurement request carries the information #1 of the reference signal that is configured by the network apparatus #1 for the terminal apparatus, so that these network apparatuses measure the reference signal from the terminal apparatus based on the information #1, and then obtain measurement results. The measurement result may be, for example, a relative time of arrival based on a TDOA technology, or an angle of arrival based on an AOA technology.

In a possible implementation, each network apparatus may send the measurement result to the location management apparatus, for example, each network apparatus includes the measurement result in a measurement response (the measurement response is, for example, an NRPPa measurement response), so that the location management apparatus positions the terminal apparatus based on these measurement results.

In this embodiment of this application, step 501 to step 504 above provide a possible example. The network apparatus #1 may obtain, by using the example, related information for configuring a transmission of the reference signal for the terminal apparatus (when the network apparatus #1 is the first network apparatus, the related information for configuring a transmission of the reference signal for the terminal apparatus may be considered as first information). Step 501 to step 504 above are not mandatory (step 501 to step 504 are marked as dashed lines in the figure). The network apparatus #1 may alternatively obtain, in another manner, the related information for configuring a transmission of the reference signal for the terminal apparatus, for example, may obtain the related information sent by another network apparatus, or may obtain the related information when the terminal apparatus is in the RRC connected state.

**Step 505:** The terminal apparatus sends an RRC connection setup request message to a network apparatus #2.

Correspondingly, the network apparatus #2 receives the RRC connection setup request message from the terminal apparatus.

In step 505, the terminal apparatus may trigger, for some causes, the network apparatus #2 to configure a transmission of the reference signal for the terminal apparatus. There may be a plurality of causes. For example, the reference signal configured by the network apparatus #1 for the terminal apparatus may be invalid. For another example, the terminal apparatus expects to update or reconfigure a transmission of the reference signal. For another example, the terminal apparatus moves out of a positioning area or a validity area of the reference signal. For another example, the terminal apparatus may move from coverage of the network apparatus #1 to coverage of the network apparatus #2. For another example, the terminal apparatus initiates a RAN update. For another example, the terminal apparatus requests to re-establish a connection to a network. For a cause for triggering, by the terminal apparatus, the network apparatus #2 to configure a transmission of the reference signal for the terminal apparatus, refer to the foregoing content. Details are not described again.

In step 505, the terminal apparatus sends the RRC connection setup request message to the network apparatus #2, where the message is used to request a reference signal configuration update. In a possible implementation, the terminal apparatus may include a cause value in the RRC connection setup request message, where the cause value is, for example, a reference signal update (SRS update) or an SRS request (SRS request). After receiving the RRC connection setup request message including the cause value, the network apparatus #2 may determine that some assistance information used to assist the network apparatus #2 in configuring a transmission of the reference signal for the terminal apparatus needs to be requested from the network apparatus #1, and then perform step 506 below.

The RRC connection setup request message may be an RRC resume request, and the RRC resume request is, for example, an RRC resume request. Alternatively, the RRC connection setup request message may be an RRC setup request, and the RRC setup request is, for example, an RRC setup request.

**Step 506:** The network apparatus #2 sends a terminal apparatus context request message #1 to the network apparatus #1.

Correspondingly, the network apparatus #1 receives the terminal apparatus context request message #1.

The network apparatus #2 receives the RRC connection setup request message from the terminal apparatus, and then requests a context of the terminal apparatus from the network apparatus #1. The terminal apparatus context request message #1 may be a retrieve UE context request (retrieve UE context request).

In step 506, the network apparatus #2 may include reference signal update cause information in the terminal apparatus context request message #1. For example, the network apparatus #2 may include a cause value in the terminal apparatus context request message #1. The cause value is, for example, a reference signal update (the cause value is, for example, an SRS update). After receiving the terminal apparatus context request message #1 including the cause value, the network apparatus #1 may determine that some assistance information used to assist the network apparatus #2 in configuring a transmission of the reference signal for the terminal apparatus needs to be sent to the network apparatus #2. In a possible implementation, if the network apparatus #1 determines to retain positioning information in the context of the terminal apparatus, because the cause value in the received terminal apparatus context request message #1 is the reference signal update, the network apparatus #1 may provide, for the network apparatus #2 in step 507 below, a context (for example, positioning information #2) used for positioning in the context of the terminal apparatus, to avoid a reference signal update failure.

**Step 507:** The network apparatus #1 sends a terminal apparatus context request response #1 to the network apparatus #2.

Correspondingly, the network apparatus #1 receives the terminal apparatus context request response #1.

In step 507, after receiving the terminal apparatus context request message #1, the network apparatus #1 may send the positioning information #2 to the network apparatus #2 (for example, include the positioning information #2 in the terminal apparatus context request response #1). The network apparatus #2 configures information #2 of the reference signal for the terminal apparatus based on the positioning information #2. Further, the network apparatus #2 sends the information #2 of the reference signal to the terminal apparatus, for example, by performing step 510 below.

The positioning information #2 may be some information used to assist the network apparatus #2 in configuring a transmission of the reference signal for the terminal apparatus. In a possible implementation, the positioning information #2 may include one information element. For example, the positioning information #2 may include a requested SRS transmission characteristic (requested SRS transmission characteristic) #2.

Two implementations of obtaining the requested SRS transmission characteristic (requested SRS transmission characteristic) #2 are described below by using Implementation El and Implementation E2. In Implementation E1, content in the requested SRS transmission characteristic #1 may be modified to obtain the requested SRS transmission characteristic #2. In Implementation E2, content in the requested SRS transmission characteristic #1 is not modified, that is, the requested SRS transmission characteristic #1 is directly used as the requested SRS transmission characteristic #2.

**Implementation E1:** The network apparatus #1 modifies information in the requested SRS transmission characteristic #1, to obtain the requested SRS transmission characteristic #2.

In Implementation E1, the network apparatus #1 may perform one or more modification operations. The following separately uses Implementation E1. 1, Implementation E1.2, and Implementation E1.3 as examples for description.

**Implementation E1.1:** The requested SRS transmission characteristic #1 does not include the information of the first timestamp. The network apparatus #1 performs at least the following step on the requested SRS transmission characteristic #1, to obtain the requested SRS transmission characteristic #2: adding the information of the first timestamp to the requested SRS transmission characteristic #2.

**Implementation E1.2:** The network apparatus #1 performs at least the following step on the requested SRS transmission characteristic #1, to obtain the requested SRS transmission characteristic #2: modifying information of a number of transmissions (the foregoing information D1.1) in the requested SRS transmission characteristic #1 to a number of remaining transmissions of the terminal apparatus. In other words, a number of transmissions indicated by information of the number of transmissions in the requested SRS transmission characteristic #2 is the number of remaining transmissions of the terminal apparatus.

For example, the network apparatus #1 is the first network apparatus, the network apparatus #2 is the second network apparatus, the number of transmissions indicated by the information of the number of transmissions in the requested SRS transmission characteristic #1 is a first number of transmissions, and the number of transmissions indicated by the information of the number of transmissions in the requested SRS transmission characteristic #2 is a second number of transmissions. For the information of the number of transmissions in the requested SRS transmission characteristic #2 and the information of the number of transmissions in the requested SRS transmission characteristic #1, refer to the foregoing related descriptions of the first number of transmissions and the second number of transmissions. Details are not described again.

**Implementation E1.3:** The network apparatus #1 performs at least the following step on the requested SRS transmission characteristic #1, to obtain the requested SRS transmission characteristic #2: deleting path loss reference information and/or spatial relation information from the requested SRS transmission characteristic #1. In other words, the requested SRS transmission characteristic #2 does not include the path loss reference information and/or the spatial relation information.

Implementation E1.1, Implementation E1.2, and Implementation E1.3 may be separately performed. For example, the network apparatus #1 may separately perform Implementation E1.1, to obtain the requested SRS transmission characteristic #2. For another example, the network apparatus #1 may separately perform Implementation E1.2, to obtain the requested SRS transmission characteristic #2. For another example, the network apparatus #1 may separately perform Implementation E1.3, to obtain the requested SRS transmission characteristic #2.

Implementation E1.1, Implementation E1.2, and Implementation E1.3 may alternatively be used in combination. For example, the network apparatus #1 may perform Implementation E1.1 and Implementation E1.3, to obtain the requested SRS transmission characteristic #2. For another example, the network apparatus #1 may perform Implementation E1.2 and Implementation E1.3, to obtain the requested SRS transmission characteristic #2. For another example, the network apparatus #1 may perform Implementation E1.1 and Implementation E1.2, to obtain the requested SRS transmission characteristic #2. For another example, the network apparatus #1 may perform Implementation E1.1, Implementation E1.2, and Implementation E1.3, to obtain the requested SRS transmission characteristic #2.

**Implementation E2:** The network apparatus #1 does not modify information in the requested SRS transmission characteristic #1, that is, the requested SRS transmission characteristic #1 may be used as the requested SRS transmission characteristic #2.

In a possible implementation, for example, the requested SRS transmission characteristic #1 includes the information of the first timestamp. The network apparatus #1 may perform no operation on the requested SRS transmission characteristic #1, and directly use the requested SRS transmission characteristic #1 as the requested SRS transmission characteristic #2.

In another possible implementation, the network apparatus #1 may directly use the requested SRS transmission characteristic #1 as the requested SRS transmission characteristic #2. In addition, the network apparatus #1 may additionally send some information to the network apparatus #2, for example, the information of the first timestamp and/or information of a second number of transmissions. In other words, the information of the first timestamp and/or the information of the second number of transmissions may not be carried in the requested SRS transmission characteristic #2.

In this embodiment provided in this application, the network apparatus #1 may modify or may not modify the requested SRS transmission characteristic #1, thereby improving solution flexibility. When the network apparatus #1 does not modify the requested SRS transmission characteristic #1, the requested SRS transmission characteristic #1 may be sent in an {octect string} manner, and the network apparatus #1 does not parse or modify information sent in the {octect string} manner, but directly forwards the information to the network apparatus #2.

In another possible implementation, if the requested SRS transmission characteristic #1 includes the information D3 (terminal reporting information), the network apparatus #1 may alternatively send the information D3 (terminal reporting information) to the network apparatus #2, so that the network apparatus #2 may refer to the information for configuring an SDT resource for the terminal apparatus.

The terminal apparatus context request response #1 may be a retrieve UE context response (retrieve UE context response). The network apparatus #1 receives the terminal apparatus context request message #1 from the network apparatus #2, and may send the terminal apparatus context request response #1 to the network apparatus #2, or may send an RRC message to the network apparatus #2, or may send a message indicating a retrieve context failure (that is, the message indicating a retrieve context failure does not include context information of the terminal apparatus).

**Step 508:** The network apparatus #2 sends, to the location management apparatus, a message used to request positioning information.

The message used to request positioning information in step 508 may be used to request information associated with a location of the terminal apparatus, for example, may be used to request path loss reference information and/or spatial relation information.

**Step 509:** The network apparatus #2 receives, from the location management apparatus, assistance information used to assist the network apparatus #2 in configuring a transmission of the reference signal for the terminal apparatus.

In step 509, the assistance information used to assist the network apparatus #2 in configuring a transmission of the reference signal for the terminal apparatus may include, for example, path loss reference information and/or spatial relation information.

When the network apparatus #2 is considered as the second network apparatus, the message used to request positioning information in step 509 may be considered as the foregoing first message, and the assistance information used to assist the network apparatus #2 in configuring a transmission of the reference signal for the terminal apparatus may be considered as the foregoing fourth information. For solutions of step 508 and step 509, refer to the related content in Implementation B1. Details are not described again.

In the implementation shown in FIG. 5, step 508 and step 509 are not mandatory steps (marked as dashed lines in the figure). For example, the network apparatus #2 may not perform step 508 and step 509. In another possible implementation, to enable the network apparatus #2 to configure a more accurate transmission of the reference signal for the terminal apparatus, the network apparatus #2 may configure some information of a transmission of the reference signal, for example, path loss reference information and/or spatial relation information, for the terminal apparatus according to Implementation B2.

**Step 510:** The network apparatus #2 sends an RRC release message to the terminal apparatus.

Correspondingly, the terminal apparatus receives the RRC release message from the network apparatus #2.

After receiving the RRC release message, the terminal apparatus may be in the RRC inactive state or the RRC idle state. The network apparatus #2 may include, in the RRC release message, the information #2 of the reference signal that is configured for the terminal apparatus, and send the information #2 to the terminal apparatus by using the RRC release message. Optionally, the network apparatus #2 may alternatively send, to the terminal apparatus by using other signaling, the information #2 of the reference signal that is configured for the terminal apparatus.

**Step 511:** The network apparatus #2 sends positioning information update to the location management apparatus.

Correspondingly, the location management apparatus receives the positioning information update.

The positioning information update may be positioning information update. The positioning information update may include the information #2 of the reference signal that is configured by the network apparatus #2 for the terminal apparatus.

It can be learned that the network apparatus #2 may notify the location management apparatus of the information #2 of the reference signal of the terminal apparatus by using the positioning information update.

**Step 512:** The terminal apparatus sends the reference signal.

After receiving the information #2 of the reference signal, the terminal apparatus needs to send the reference signal based on the information #2 of the reference signal, for example, send the reference signal on a resource configured in the information #2 of the reference signal. A type of the reference signal is the same as a type of the reference signal that is required by the information #2 of the reference signal.

After receiving the information #2 of the reference signal, the terminal apparatus needs to send the reference signal based on the information #2 of the reference signal, for example, send the reference signal on a resource configured in the information #2 of the reference signal. A type of the reference signal is the same as a type of the reference signal that is required by the information #2 of the reference signal. In this embodiment of this application, the location management apparatus may alternatively select a network apparatus used for measurement, and send a measurement request (the measurement request is, for example, an NRPPa measurement request) to one or more selected network apparatuses, where the measurement request carries the information #2 of the reference signal that is configured by the network apparatus #2 for the terminal apparatus, so that these network apparatuses measure the reference signal from the terminal apparatus based on the information #2, and then obtain measurement results. Each network apparatus may send the measurement result to the location management apparatus, so that the location management apparatus positions the terminal apparatus based on these measurement results. For related content, refer to the foregoing descriptions. Details are not described again.

**Step 513:** The terminal apparatus sends an RRC connection setup request message to a network apparatus #3.

Correspondingly, the network apparatus #3 receives the RRC connection setup request message from the terminal apparatus.

In step 513, the terminal apparatus needs to request the network apparatus #3 to configure a transmission of the reference signal for the terminal apparatus. Based on some causes, the terminal apparatus may determine that the terminal apparatus needs to request the network apparatus #3 to configure a transmission of the reference signal for the terminal apparatus. For example, a transmission of the reference signal that is configured by the network apparatus #2 for the terminal apparatus is invalid. For an example of a related cause, refer to the related content that the terminal apparatus needs to request the network apparatus #2 to configure a transmission of the reference signal for the terminal apparatus. Details are not described again.

In step 513, the terminal apparatus may include reference signal update cause information in the RRC connection setup request message. The RRC connection setup request message may further include an identifier of the network apparatus #2, so that the network apparatus #3 identifies the network apparatus #2.

For related content of step 513, refer to the related content of step 505. Details are not described again.

**Step 514:** The network apparatus #3 sends a terminal apparatus context request message #2 to the network apparatus #2.

Correspondingly, the network apparatus #2 receives the terminal apparatus context request message #2.

The network apparatus #3 receives the RRC connection setup request message from the terminal apparatus, and then requests a context of the terminal apparatus from the network apparatus #2.

In step 514, the network apparatus #2 may include reference signal update cause information in the terminal apparatus context request message #1.

For related content of step 514, refer to the related content of step 506. Details are not described again.

**Step 515:** The network apparatus #2 sends a terminal apparatus context request response #2 to the network apparatus #3.

Correspondingly, the network apparatus #2 receives the terminal apparatus context request response #2.

In step 515, after receiving the terminal apparatus context request message #2, the network apparatus #2 may send positioning information #3 to the network apparatus #3 (for example, include the positioning information #3 in the terminal apparatus context request response #2). The network apparatus #3 configures information #3 of the reference signal for the terminal apparatus based on the positioning information #3. Further, the network apparatus #3 sends the information #3 of the reference signal to the terminal apparatus, for example, by performing step 516 below.

The positioning information #3 may be some information used to assist the network apparatus #3 in configuring a transmission of the reference signal for the terminal apparatus. In a possible implementation, the positioning information #3 may include one information element. For example, the positioning information #3 may include a requested SRS transmission characteristic (requested SRS transmission characteristic) #3. The requested SRS transmission characteristic #3 may be obtained based on the requested SRS transmission characteristic #2. For a specific manner, refer to the foregoing manner of obtaining the requested SRS transmission characteristic #2 based on the requested SRS transmission characteristic #1. Details are not described again.

For example, the number of transmissions of the reference signal that is determined by the network apparatus #1 is 100. When the network apparatus #1 receives the terminal apparatus context request message from the network apparatus #2, the network apparatus #1 estimates that, after the network apparatus #1 configures a transmission of the reference signal for the terminal apparatus, the terminal apparatus has performed 10 transmissions of the reference signal (that is, the terminal apparatus has experienced 10 transmission periodicities of the reference signal), and the network apparatus #1 may use 90 (a difference between 100 and 10) as a number of remaining transmissions of the terminal apparatus and indicate the number of remaining transmissions to the network apparatus #2. When the network apparatus #2 receives the terminal apparatus context request message from the network apparatus #3, the network apparatus #2 estimates that, after the network apparatus #2 configures a transmission of the reference signal for the terminal apparatus, the terminal apparatus has performed 11 transmissions of the reference signal (that is, the terminal apparatus has experienced 11 transmission periodicities of the reference signal), and the network apparatus #2 may use 79 (a difference between 90 and 11) as a number of remaining transmissions of the terminal apparatus and indicate the number of remaining transmissions to the network apparatus #3.

For related content of step 515, refer to the related content of step 507. Details are not described again. The network apparatus #3 may re-request path loss reference information and/or spatial information from an LMF, or configure a transmission of the reference signal for the terminal apparatus based on an RRM measurement result reported by the terminal apparatus. For a related solution, refer to the foregoing content. Details are not described again.

**Step 516:** The network apparatus #3 sends an RRC release message to the terminal apparatus.

Correspondingly, the terminal apparatus receives the RRC release message from the network apparatus #3.

After receiving the RRC release message, the terminal apparatus may be in the RRC inactive state or the RRC idle state. The network apparatus #3 may include, in the RRC release message, the information #3 of the reference signal that is configured for the terminal apparatus, and send the information #3 to the terminal apparatus by using the RRC release message. Optionally, the network apparatus #3 may alternatively send, to the terminal apparatus by using other signaling, the information #3 of the reference signal that is configured for the terminal apparatus.

For related content of step 516, refer to the related content of step 510. Details are not described again.

**Step 517:** The network apparatus #3 sends positioning information update to the location management apparatus.

Correspondingly, the location management apparatus receives the positioning information update.

It can be learned that the network apparatus #3 may notify the location management apparatus of the information #3 of the reference signal of the terminal apparatus by using the positioning information update.

For related content of step 517, refer to the related content of step 511. Details are not described again.

FIG. 5 is illustrated by using the network apparatus #1, the network apparatus #2, and the network apparatus #3 as an example. During actual application, there may be fewer or more network apparatuses that configure a transmission of the reference signal for the terminal apparatus. FIG. 5 provides a possible example. Some steps in FIG. 5 may not be performed, or some other signaling may be added between some steps.

It can be learned from the foregoing content that, in the solution provided in this embodiment of this application, a more proper reference signal parameter may be configured for the terminal apparatus. During actual application, a preconfigured solution may be used for a specific implementation in the foregoing implementations, or some use conditions may be set for each implementation. For example, when the first network apparatus is a network apparatus (that is, the foregoing network apparatus #1) that communicates with the location management apparatus for the first time, Implementation A1 may be used. If the first network apparatus is not a network apparatus (for example, the foregoing network apparatus #2) that communicates with the location management apparatus for the first time, Implementation A2 may be used.

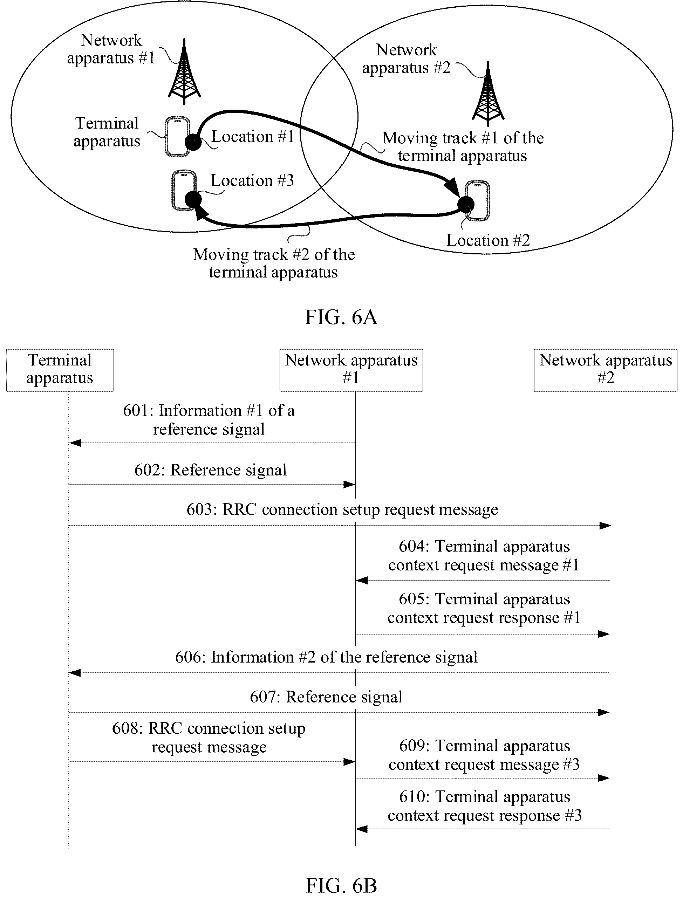

Based on the foregoing content, FIG. 6A is an example of a diagram of another scenario to which an embodiment of this application is applicable. As shown in FIG. 6A, a terminal apparatus first moves from a location #1 to a location #2 (for example, a moving track #1 of the terminal apparatus shown in FIG. 6A), and then moves from the location #2 to a location #3 (for example, a moving track #2 of the terminal apparatus shown in FIG. 6A). The location #1 and the location #3 may be a same location, or may be different locations. When the terminal apparatus is at the location #1 and the location #3, the terminal apparatus needs to send a reference signal based on a transmission of the reference signal that is configured by a network apparatus #1 (for example, the location #1 and the location #3 belong to signal coverage of the network apparatus #1). When the terminal apparatus is at the location #2, the terminal apparatus needs to send a reference signal based on a transmission of the reference signal that is configured by a network apparatus #2 (for example, the location #2 belongs to signal coverage of the network apparatus #2).

A solution shown in FIG. 6B is an example with reference to the scenario shown in FIG. 6A. In FIG. 6A and FIG. 6B, when the terminal apparatus moves from the location #1 to the location #2, the network apparatus #1 may be considered as the foregoing first network apparatus, and the network apparatus #2 may be considered as the foregoing second network apparatus; or the network apparatus #1 may be considered as the network apparatus #1 in FIG. 5, and the network apparatus #2 may be considered as the network apparatus #2 in FIG. 5; or the network apparatus #1 may be considered as the network apparatus #2 in FIG. 5, and the network apparatus #2 may be considered as the network apparatus #3 in FIG. 5. When the terminal apparatus moves from the location #2 to the location #3, the network apparatus #2 may be considered as the foregoing first network apparatus, and the network apparatus #1 may be considered as the foregoing second network apparatus; or the network apparatus #2 may be considered as the network apparatus #1 in FIG. 5, and the network apparatus #1 may be considered as the network apparatus #2 in FIG. 5; or the network apparatus #2 may be considered as the network apparatus #2 in FIG. 5, and the network apparatus #1 may be considered as the network apparatus #3 in FIG. 5.

In FIG. 6A and FIG. 6B, an example in which the network apparatus #1 is the network apparatus #1 in FIG. 5 and the network apparatus #2 is the network apparatus #2 in FIG. 5 is used. A difference lies in that the terminal apparatus returns from an area corresponding to the network apparatus #2 to an area corresponding to the network apparatus #1. For corresponding content, reference may be made to each other. Details are not described again.

With reference to the scenario in FIG. 6A, the embodiments shown in FIG. 1, FIG. 2A, FIG. 2B, FIG. 2D, FIG. 3, and FIG. 4, and the foregoing other content, **FIG. 6B** is an example of a schematic flowchart of another communication method according to an embodiment of this application.

As shown in FIG. 6B, the method includes the following steps.

**Step 601:** The network apparatus #1 sends configuration information #1 of a reference signal to the terminal apparatus.

Correspondingly, the terminal apparatus receives the configuration information #1 of the reference signal from the network apparatus #1.

The terminal apparatus is at the location #1, the network apparatus #1 configures the information #1 of the reference signal for the terminal apparatus, and the information #1 of the reference signal may be carried in an RRC release message.

In step 601, for example, the network apparatus #1 determines that a number of transmissions (or referred to as a number of periodic transmissions) of the reference signal of the terminal apparatus is a number #a of transmissions.

**Step 602:** The terminal apparatus sends the reference signal.

After receiving the information #1 of the reference signal, the terminal apparatus needs to send the reference signal based on the information #1 of the reference signal.

**Step 603:** The terminal apparatus sends an RRC connection setup request message to the network apparatus #2.

Correspondingly, the network apparatus #2 receives the RRC connection setup request message from the terminal apparatus.

The terminal apparatus may move from the location #1 to the location #2, and perform step 603 at the location #2.

**Step 604:** The network apparatus #2 sends a terminal apparatus context request message #1 to the network apparatus #1.

Correspondingly, the network apparatus #1 receives the terminal apparatus context request message #1.

**Step 605:** The network apparatus #1 sends a terminal apparatus context request response #1 to the network apparatus #2.

Correspondingly, the network apparatus #1 receives the terminal apparatus context request response #1.

In step 605, after receiving the terminal apparatus context request message #1, the network apparatus #1 may send positioning information #2 to the network apparatus #2 (for example, include the positioning information #2 in the terminal apparatus context request response #1). The network apparatus #2 configures information #2 of the reference signal for the terminal apparatus based on the positioning information #2.

The positioning information #2 may include indication information of a number of transmissions, and the indication information of the number of transmissions indicates that a number of transmissions (or referred to as a number of periodic transmissions) of the reference signal of the terminal apparatus is a number #b of transmissions.

The number #b of transmissions is a difference between the number #a of transmissions and a number of transmissions of the reference signal that are performed by the terminal apparatus after the network apparatus #1 configures the information #1 of the reference signal.

**Step 606:** The network apparatus #2 sends the information #2 of the reference signal to the terminal apparatus.

Correspondingly, the terminal apparatus receives the information #2 of the reference signal from the network apparatus #2.

The terminal apparatus is at the location #2, the network apparatus #2 configures the information #2 of the reference signal for the terminal apparatus, and the information #2 of the reference signal may be carried in an RRC release message.

**Step 607:** The terminal apparatus sends the reference signal.

After receiving the information #2 of the reference signal, the terminal apparatus needs to send the reference signal based on the information #2 of the reference signal.

**Step 608:** The terminal apparatus sends an RRC connection setup request message to the network apparatus #1.

Correspondingly, the network apparatus #3 receives the RRC connection setup request message from the terminal apparatus.

The terminal apparatus may move from the location #2 to the location #3, and perform step 608 at the location #3.

**Step 609:** The network apparatus #1 sends a terminal apparatus context request message #3 to the network apparatus #2.

Correspondingly, the network apparatus #2 receives the terminal apparatus context request message #3.

The network apparatus #1 receives the RRC connection setup request message from the terminal apparatus, and then requests a context of the terminal apparatus from the network apparatus #2.

**Step 610:** The network apparatus #2 sends a terminal apparatus context request response #3 to the network apparatus #1.

Correspondingly, the network apparatus #1 receives the terminal apparatus context request response #3.

In step 610, after receiving the terminal apparatus context request message #3, the network apparatus #2 may send positioning information #4 to the network apparatus #1 (for example, include the positioning information #4 in the terminal apparatus context request response #3). The network apparatus #1 configures information #4 of the reference signal for the terminal apparatus based on the positioning information #4, and then may send the information #4 of the reference signal to the terminal apparatus, so that the terminal apparatus sends the reference signal based on the information #4 of the reference signal.

The positioning information #4 may include indication information of a number of transmissions, and the indication information of the number of transmissions indicates that a number of transmissions (or referred to as a number of periodic transmissions) of the reference signal of the terminal apparatus is a number #c of transmissions.

The number #c of transmissions is a difference between the number #b of transmissions and a number of transmissions of the reference signal that are performed by the terminal apparatus after the network apparatus #2 configures the information #2 of the reference signal.

The number #b of transmissions is different from the number #c of transmissions. For example, the number #b of transmissions may be 100, and the number #c of transmissions may be 90. It may also be understood that, after the terminal apparatus moves from the location #1 to the location #2 (the location #1 is different from the location #2), a number of transmissions indicated by information sent by the network apparatus #1 to the network apparatus #2 is #b, that is, a number of transmissions of the reference signal that needs to be configured by the network apparatus #2 for the terminal apparatus is #b. After the terminal apparatus moves from the location #2 to the location #3 (the location #3 may be the same as or different from the location #1), a number of transmissions indicated by information sent by the network apparatus #2 to the network apparatus #1 is #c, that is, a number of transmissions of the reference signal that needs to be configured by the network apparatus #1 for the terminal apparatus is #c. Because the number #b of transmissions is different from the number #c of transmissions, it can be learned that numbers of transmissions of the reference signal that are configured by the two network apparatuses for the terminal apparatus change when the terminal apparatus moves.

Because the numbers of transmissions of the reference signal that are configured by the two network apparatuses for the terminal apparatus change, the network apparatus in this embodiment of this application may configure a more proper parameter for the terminal apparatus, thereby reducing resources.

In addition, because the number #b of transmissions is different from the number #c of transmissions, it may also be proved that the number #c of transmissions is determined with reference to the number #b of transmissions and a number of transmissions of the reference signal that have been performed by the terminal apparatus. This calculation process may be calculated by the network apparatus #2, or may be obtained by the network apparatus #2 from another apparatus (for example, a location management apparatus) (calculated by the another apparatus).

Names of the foregoing messages are merely examples. With evolution of communication technologies, the name of any of the foregoing messages may be changed. However, regardless of how the names of the messages are changed, provided that meanings of the messages are the same as those of the messages in this application, the messages fall within the protection scope of this application.

In embodiments of this application, sending information to a terminal device may be understood as that a destination of the information is the terminal device. For example, that a module A sends information to a terminal includes: The module A sends the information to the terminal through an air interface. Optionally, the module A may perform a baseband operation and/or an intermediate radio frequency operation on the information; or the module A submits the information to a module B, and the module B sends the information to the terminal. The module B may transparently transmit the information to the terminal; and segment the information and then send the information, or multiplex the information and other information and then send the information. Optionally, the module B may perform a baseband operation and/or an intermediate radio frequency operation on the information and then send the information. Optionally, the module B may encapsulate the information in a data packet. Optionally, the module B may further add a header, a padding bit, and/or the like to the data packet.

In embodiments of this application, receiving information from a terminal device may be understood as that a source of the information is the terminal device. For example, that a module A receives information from a terminal device includes: The module A receives the information from the terminal through an air interface. Optionally, the module A may perform a baseband operation and/or an intermediate radio frequency operation on the information; or a module B receives the information from the terminal through an air interface, and submits the information to the module A. That the module B submits the information to the module A includes: transparently submitting the received information to the module A; combining a plurality of received segments into the information and then submitting the information to the module A; or extracting the information from multiplexed information and then submitting the information to the module A. Optionally, the module B may perform a baseband operation and/or an intermediate radio frequency operation on the received information and then send the information. Optionally, the information received by the module B is encapsulated in a data packet. Optionally, the data packet includes a header, a padding bit, and/or the like.

The module B may be one module, or may be a plurality of modules coupled in sequence. This is not limited. For example, the module A is a DU module, and the module B is an RU module. For another example, the module A is a CU-CP module, and the module B is a DU module and an RU module.

The foregoing mainly describes the solutions provided in this application from a perspective of interaction between all network elements. It may be understood that, to implement the foregoing functions, the foregoing network elements include corresponding hardware structures and/or software modules for performing the functions. A person skilled in the art should be easily aware that, in combination with units and algorithm steps of the examples described in embodiments disclosed in this specification, the present invention may be implemented by using hardware or a combination of hardware and computer software. Whether a function is performed by using hardware or hardware driven by computer software depends on particular applications and design constraints of the technical solutions. A person skilled in the art may use different methods to implement the described functions for each particular application, but it should not be considered that the implementation goes beyond the scope of the present invention.

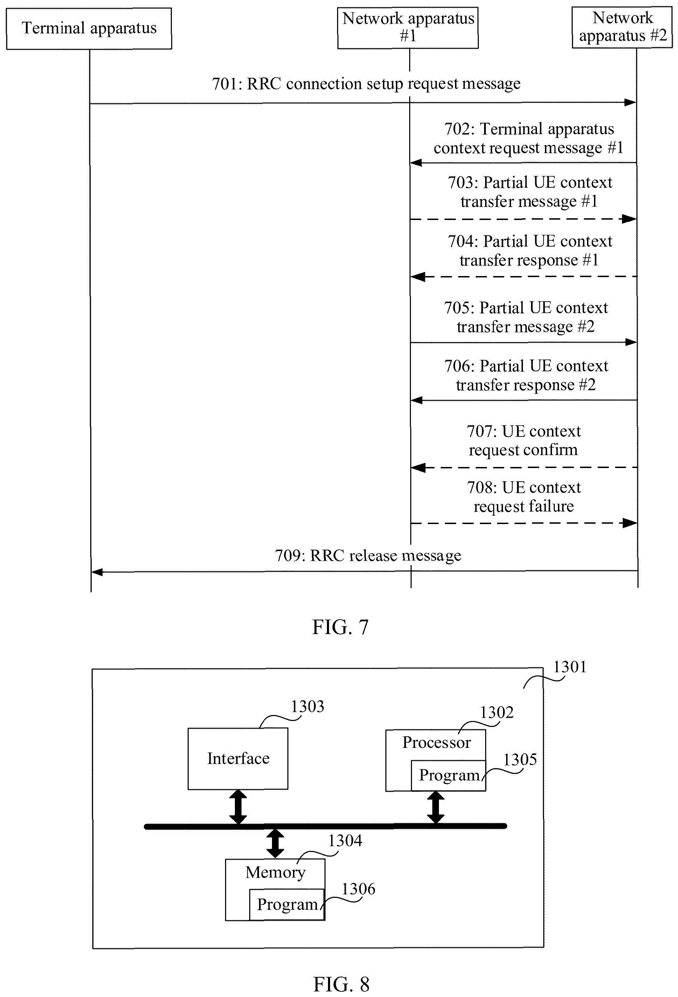

Based on the embodiments shown in FIG. 1, FIG. 2A, FIG. 2B, FIG. 2D, FIG. 3, FIG. 4, FIG. 5, FIG. 6A, and FIG. 6B and the foregoing other content, FIG. 7 is an example of a schematic flowchart of a communication method according to an embodiment of this application. In FIG. 7, an example in which a terminal apparatus moves from coverage of a network apparatus #1 to coverage of a network apparatus #2 is used for description. In FIG. 7, the network apparatus #1 may alternatively be the first network apparatus in FIG. 4, and the network apparatus #2 may alternatively be the second network apparatus in FIG. 4. In this embodiment of this application, the first network apparatus may be, for example, an anchor base station (anchor gNB), and the second network apparatus may be, for example, a serving base station (serving gNB). For related content of the terminal apparatus, the network apparatus #1, the network apparatus #2, and a location management apparatus in FIG. 7, refer to the related descriptions in FIG. 5. Details are not described again.

In the example provided in FIG. 7, the terminal apparatus may move from the coverage of the network apparatus #1 to the coverage of the network apparatus #2. For example, before step 701, the location management apparatus sends a positioning information request to the network apparatus #1, where the positioning information request includes positioning information #1, and the positioning information #1 is used to configure a transmission of a reference signal of the terminal apparatus; and the network apparatus #1 configures a transmission of the reference signal for the terminal apparatus based on the positioning information #1, for example, the network apparatus #1 configures information #1 of the reference signal for the terminal apparatus based on the positioning information #1. The network apparatus #1 may obtain, by using the example, related information for configuring a transmission of the reference signal for the terminal apparatus (when the network apparatus #1 is the first network apparatus, the related information for configuring a transmission of the reference signal for the terminal apparatus may be considered as first information). With reference to FIG. 7, for example, before step 701, the solution provided in FIG. 7 may further include some or all of step 501, step 502, step 503, and step 504. For related content, refer to the related descriptions of FIG. 5. Details are not described again.

The following provides descriptions with reference to FIG. 7.

**Step 701:** The terminal apparatus sends an RRC connection setup request message to the network apparatus #2.

Correspondingly, the network apparatus #2 receives the RRC connection setup request message from the terminal apparatus.

The RRC connection setup request message may carry an event report (event report). For related content of step 701, refer to the related descriptions of step 505. Details are not described again.

**Step 702:** The network apparatus #2 sends a terminal apparatus context request message #1 to the network apparatus #1.

Correspondingly, the network apparatus #1 receives the terminal apparatus context request message #1.

The terminal apparatus context request message #1 may be a retrieve UE context request (retrieve UE context request).

For related content of step 701, refer to the related descriptions of step 506. Details are not described again.

**Step 703:** The network apparatus #1 sends a partial UE context transfer message #1 to the network apparatus #2.

Correspondingly, the network apparatus #2 receives the partial UE context transfer message #1.

The partial UE context transfer message #1 may be, for example, a partial UE context transfer (partial UE context transfer).

Before step 703, after the network apparatus #1 receives the terminal apparatus context request message #1, the network apparatus #1 may determine that a context of the terminal apparatus needs to be retained. Therefore, in step 703, the partial UE context transfer message #1 may include only a partial UE context, for example, may include an SDT related radio link control layer (radio link control layer, RLC) context, to establish an SDT session. For details about the SDT, refer to Article 18.3 of TS38.300.

**Step 704:** The network apparatus #2 sends a partial UE context transfer response #1 to the network apparatus #1.

Correspondingly, the network apparatus #1 receives the partial UE context transfer response #1.

The partial UE context transfer response #1 may be, for example, a partial UE context transfer acknowledgment (partial UE context transfer acknowledgment).

The partial UE context transfer response #1 may be considered as a response message for the partial UE context transfer message #1.

**Step 705:** The network apparatus #1 may send a partial UE context transfer message #2 to the network apparatus #2.

Correspondingly, the network apparatus #2 receives the partial UE context transfer message #2.

The partial UE context transfer message #2 may be, for example, a partial UE context transfer (partial UE context transfer).

In step 705, the network apparatus #1 may perform step 705 based on the received positioning information request. For example, the network apparatus #1 may send positioning information #2 to the network apparatus #2 (for example, include the positioning information #2 in the partial UE context transfer message #2). The network apparatus #2 configures information #2 of the reference signal for the terminal apparatus based on the positioning information #2. Further, the network apparatus #2 sends the information #2 of the reference signal to the terminal apparatus, for example, by performing step 709 below. The partial UE context transfer message #2 may also be considered as an example of the second information in step 403 in the solution provided in FIG. 4.

For related descriptions of the positioning information #2, refer to the foregoing descriptions of the positioning information #2 in FIG. 5. For example, the positioning information #2 may be some information used to assist the network apparatus #2 in configuring a transmission of the reference signal for the terminal apparatus. In a possible implementation, the positioning information #2 may include one information element. For example, the positioning information #2 may include a requested SRS transmission characteristic (requested SRS transmission characteristic) #2. Related content is not described herein again.

For related content of step 705, refer to the related descriptions of step 507. Details are not described again.

The messages in step 703 and step 705 may alternatively be combined into one message, or may be separately two messages.

**Step 706:** The network apparatus #2 sends a partial UE context transfer response #2 to the network apparatus #1.

Correspondingly, the network apparatus #1 receives the partial UE context transfer response #2.

The partial UE context transfer response #2 may be, for example, a partial UE context transfer acknowledgment (partial UE context transfer acknowledgment).

The partial UE context transfer response #2 may be considered as a response message for the partial UE context transfer message #2.

The messages in step704 and step 706 may alternatively be combined into one message, or may be separately two messages.

**Step 707:** The network apparatus #2 sends UE context request confirm to the network apparatus #1.

Correspondingly, the network apparatus #1 receives the UE context request confirm.

The UE context request confirm may be, for example, a retrieve UE context confirm (retrieve UE context confirm).

The network apparatus #2 may perform step 707 after detecting that the SDT session ends. The UE context request confirm may include information indicating that an SDT transmission is normal, or include information indicating that a link is faulty.

**Step 708:** The network apparatus #1 sends a UE context request failure to the network apparatus #2.

Correspondingly, the network apparatus #2 receives the UE context request failure.

The UE context request failure may be, for example, a retrieve UE context failure (retrieve UE context failure). The UE context request failure may be considered as a response message for the UE context request confirm.

After receiving the UE context request confirm, the network apparatus #1 determines that the SDT session ends, and then may perform step 708.

**Step 709:** The network apparatus #2 sends an RRC release message to the terminal apparatus.

Correspondingly, the terminal apparatus receives the RRC release message from the network apparatus #2.

After receiving the RRC release message, the terminal apparatus may be in an RRC inactive state or an RRC idle state. The network apparatus #2 may include, in the RRC release message, the information #2 of the reference signal that is configured for the terminal apparatus, and send the information #2 to the terminal apparatus by using the RRC release message. Optionally, the network apparatus #2 may alternatively send, to the terminal apparatus by using other signaling, the information #2 of the reference signal that is configured for the terminal apparatus.

After receiving the information #2 of the reference signal, the terminal apparatus needs to send the reference signal based on the information #2 of the reference signal, for example, send the reference signal on a resource configured by using the information #2 of the reference signal. A type of the reference signal is the same as a type of the reference signal that is required by the information #2 of the reference signal.

It can be learned from the foregoing content that, in the solution provided in this embodiment of this application, a more proper reference signal parameter may be configured for the terminal apparatus.

FIG. 7 is illustrated by using the network apparatus #1 and the network apparatus #2 as an example. During actual application, there may be fewer or more network apparatuses that configure a transmission of the reference signal for the terminal apparatus. FIG. 7 provides a possible example. Some steps in FIG. 7 may not be performed, or some other signaling may be added between some steps. For example, step 703, step 704, step 707, and step 708 are not mandatory (step 703, step 704, step 707, and step 708 in the figure are marked as dashed lines).

According to the foregoing method, FIG. 8 is a diagram of a structure of an apparatus according to an embodiment of this application.

FIG. 8 is a simplified diagram of an apparatus 1301. The apparatus 1301 is configured to implement a function of a network element in embodiments of this application. For example, the network element may be a base station, a terminal, a DU, a CU, a CU-CP, a CU-UP, or an RU. The apparatus 1301 may be the network element, an apparatus that can be installed in the network element, or an apparatus that can be used together with the network element. This is not limited. For example, the apparatus may be a chip or a chip system. The apparatus 1301 includes an interface 1303 and a processor 1302. Optionally, the processor 1302 is configured to execute a program 1305. The processor 1302 may store the program 1305, or obtain the program 1305 from another component or another device (for example, from a memory 1304 or from a third-party website through downloading). Optionally, the apparatus 1301 includes the memory 1304. The memory 1304 is configured to store a program 1306. The program 1306 may be pre-stored, or may be subsequently loaded. Optionally, the memory 1304 may be further configured to store necessary data. These components operate together to provide various functions described in embodiments of this application.

The processor 1302 may include one or more processors to serve as a combination of computing devices. The processor 1302 may include one or more of the following: a microprocessor, a microcontroller, a digital signal processor (Digital Signal Processor, DSP), a digital signal processing device (Digital Signal Processing device, DSPD), an application-specific integrated circuit (Application-Specific Integrated Circuit, ASIC), a field programmable gate array (Field Programmable Gate Array, FPGA), a programmable logic device (programmable logic device, PLD), gating logic, transistor logic, a discrete hardware circuit, a processing circuit, or other proper hardware or firmware, and/or a combination of hardware and software configured to perform various functions described in embodiments of this application. The processor 1302 may be a general-purpose processor or a special-purpose processor. For example, the processor 1302 may be a baseband processor or a central processing unit. The baseband processor may be configured to process a communication protocol and communication data. The central processing unit may be configured to execute a software program, and process data in the software program.

The interface 1303 may include any proper hardware or software configured to enable communication with one or more computer devices (for example, the network elements in embodiments of this application). For example, in some embodiments, the interface 1303 may include a terminal and/or a pin configured to be coupled with a wire of a wired connection or a wireless interface of a wireless connection. In some embodiments, the interface 1303 may include a transmitter, a receiver, an interface, and/or an antenna. The interface may be configured to enable communication between computer devices (for example, the network elements in embodiments of this application) by using any available protocol (for example, the 3GPP standard protocol).

The program in embodiments of this application is software in a broad sense. The software may be program code, a program, a subprogram, an instruction set, code, a code segment, a software module, an application program, a software application program, or the like. The program may be run in a processor and/or a computer, to perform various functions and/or processes described in embodiments of this application.

The memory 1304 may store necessary data needed when the processor 1302 executes software. The memory 1304 may be implemented by using any proper storage technology. For example, the memory 1304 may be any available storage medium that can be accessed by the processor and/or the computer. A non-limiting example of the storage medium is a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a removable medium, an optical disk memory, a magnetic disk storage medium, a magnetic storage device, a flash memory, a register, a state memory, a remotely installed memory, a local or remote storage component, or any other medium that can carry or store software, data, or information and that can be accessed by the processor/computer.

The memory 1304 and the processor 1302 may be separately disposed, or may be integrated together. The processor 1302 may read information from the memory 1304, and store and/or write information in the memory. The memory 1304 may be integrated into the processor 1302. The processor 1302 and the memory 1304 may be disposed in an integrated circuit (for example, an application-specific integrated circuit (application-specific integrated circuit, ASIC)). The integrated circuit may be disposed in the network element or another network node in embodiments of this application. In the figure, the memory 1304 is a dashed line, which further identifies that the memory is optional.

Further, the communication apparatus 1301 may include a bus system. The processor 1302, the memory 1304, and the interface 1303 may be connected through the bus system.

As shown in FIG. 8, the apparatus 1301 may be a first network apparatus or a second network apparatus, or may be a chip or a circuit, for example, a chip or a circuit that may be disposed in the first network apparatus, or a chip or a circuit that may be disposed in the second network apparatus.

When the apparatus 1301 is configured to implement a function of the first network apparatus, through the interface 1303, the processor 1302 is configured to: receive first information; receive a terminal apparatus context request message from a second network apparatus; and send second information to the second network apparatus.

When the apparatus 1301 is configured to implement a function of the second network apparatus, through the interface 1303, the processor 1302 is configured to: send a terminal apparatus context request message to a first network apparatus; and receive second information from the first network apparatus.

When the apparatus 1301 is configured to implement a function of the second network apparatus, the processor 1302 is further configured to: determine a second number of transmissions of a reference signal based on the second information; and when a number of transmissions performed by the terminal apparatus reaches the second number of transmissions, send, to the terminal apparatus through the interface 1303, information indicating that the terminal apparatus does not need to transmit the reference signal.

When the apparatus 1301 is configured to implement a function of the second network apparatus, through the interface 1303, the processor 1302 is further configured to: send a first message to a location management apparatus, where the first message is used to request to update path loss reference information and/or spatial relation information; receive fourth information from the location management apparatus, where the fourth information includes path loss reference information and/or spatial relation information; and send configuration information of the reference signal to the terminal apparatus, where the configuration information of the reference signal is determined based on the fourth information and the second information.

When the apparatus 1301 is configured to implement a function of the second network apparatus, through the interface 1303, the processor 1302 is further configured to: receive measurement information from the terminal apparatus; and send the configuration information of the reference signal to the terminal apparatus.

For concepts, explanations, detailed descriptions, and other steps of the communication apparatus that are related to the technical solutions provided in embodiments of this application, refer to the descriptions of the content in the foregoing methods or other embodiments. Details are not described herein.

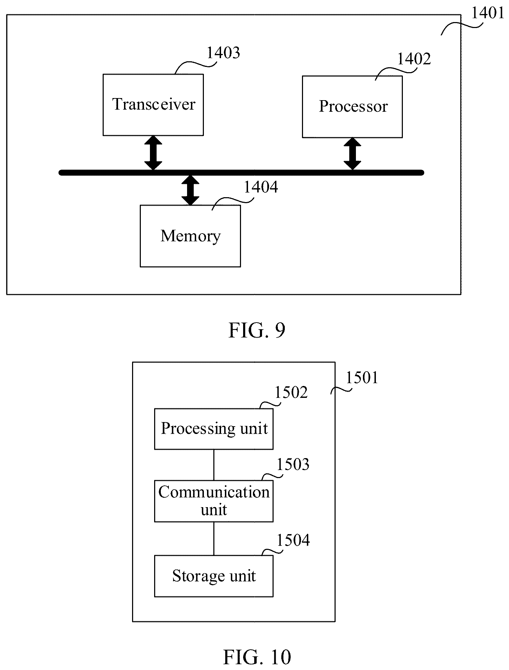

According to the foregoing method, **FIG. 9** is a diagram of a structure of a communication apparatus according to an embodiment of this application. As shown in FIG. 9, the apparatus 1401 may include a transceiver 1403 and a processor 1402. Further, the apparatus 1401 may include a memory 1404. In the figure, the memory 1404 is a dashed line, which further identifies that the memory is optional. The transceiver 1403 is configured to input and/or output information; and the processor 1402 is configured to execute a computer program or instructions, so that the apparatus 1401 is implemented by the first network apparatus or the second network apparatus in the related solution in FIG. 4 or FIG. 5. In this embodiment of this application, the transceiver 1403 may implement the solution implemented by the interface 1303 in FIG. 8, the processor 1402 may implement the solution implemented by the processor 1302 in FIG. 8, and the memory 1404 may implement the solution implemented by the memory 1304 in FIG. 8. Details are not described herein again.

Based on the foregoing embodiments and a same concept, **FIG. 10** is a diagram of a communication apparatus according to an embodiment of this application. As shown in FIG. 10, the apparatus 1501 may be a first network apparatus or a second network apparatus, or may be a chip or a circuit, for example, a chip or a circuit that may be disposed in the first network apparatus or the second network apparatus.

The apparatus 1501 includes a processing unit 1502 and a communication unit 1503. Further, the apparatus 1501 may include or may not include a storage unit 1504. In the figure, the storage unit 1504 is a dashed line, which further identifies that the storage unit is optional.

When the apparatus 1501 is configured to implement a function of the first network apparatus, through the communication unit 1503, the processing unit 1502 is configured to: receive first information; receive a terminal apparatus context request message from a second network apparatus; and send second information to the second network apparatus.

When the apparatus 1501 is configured to implement a function of the second network apparatus, through the communication unit 1503, the processing unit 1502 is configured to: send a terminal apparatus context request message to a first network apparatus; and receive second information from the first network apparatus.

For concepts, explanations, detailed descriptions, and other steps of the communication apparatus that are related to the technical solutions provided in embodiments of this application, refer to the descriptions of the content in the foregoing methods or other embodiments. Details are not described herein.

It may be understood that, for functions of all units in the apparatus 1501, refer to implementations of corresponding method embodiments. Details are not described herein again.

It should be understood that division into the units in the communication apparatus is merely logical function division. During actual implementation, all or some of the units may be integrated into one physical entity, or may be physically separated. In this embodiment of this application, the communication unit 1503 may be implemented by the interface 1303 in FIG. 8, and the processing unit 1502 may be implemented by the processor 1302 in FIG. 8.

According to the method provided in embodiments of this application, this application further provides a computer program product. The computer program product includes computer program code or instructions. When the computer program code or the instructions are run on a computer, the computer is enabled to perform the method according to any one of the embodiments shown in FIG. 4 and FIG. 5.

According to the method provided in embodiments of this application, this application further provides a computer-readable storage medium. The computer-readable medium stores program code. When the program code is run on a computer, the computer is enabled to perform the method according to any one of the embodiments shown in FIG. 4 and FIG. 5.

According to the method provided in embodiments of this application, this application further provides a chip system. The chip system may include a processor. The processor is coupled to a memory, and may be configured to perform the method according to any one of the embodiments shown in FIG. 4 and FIG. 5. Optionally, the chip system further includes the memory. The memory is configured to store a computer program (which may also be referred to as code or instructions). The processor is configured to invoke a computer program from the memory and run the computer program, so that a device on which the chip system is installed performs the method according to any one of the embodiments shown in FIG. 4 and FIG. 5.

According to the method provided in embodiments of this application, this application further provides a system, including one or more first network apparatuses described above.

In a possible implementation, the system may further include one or more terminal apparatuses. In another possible implementation, the system may further include one or more second network apparatuses. In another possible implementation, the system may further include a location management apparatus.

All or some of the foregoing embodiments may be implemented by using software, hardware, firmware, or any combination thereof. When software is used to implement embodiments, all or some of the embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a special-purpose computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state drive (solid state drive, SSD)), or the like.

It should be noted that a part of this patent application document includes content protected by copyright. Except for making copies of patent documents of the Patent Office or recorded content of patent documents, the copyright owner reserves the copyright.

The network device and the terminal device in the foregoing apparatus embodiments correspond to the network device and the terminal device in the method embodiments. A corresponding module or unit performs a corresponding step. For example, the communication unit (the transceiver) performs a receiving step or a sending step in the method embodiments, and a step other than the sending step and the receiving step may be performed by the processing unit (the processor). For a function of a specific unit, refer to a corresponding method embodiment. There may be one or more processors.

Terms such as "component", "module", and "system" used in this specification are used to indicate computer-related entities, hardware, firmware, combinations of hardware and software, software, or software being executed. For example, a component may be but is not limited to a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with illustrative logical blocks (illustrative logical block) described in embodiments disclosed in this specification, steps (step) may be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be or may not be physically separate, and parts displayed as units may be or may not be physical units, that is, may be located in one place, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. When the functions are implemented in a form of a software functional unit and sold or used as an independent product, the functions may be stored in a computer-readable storage medium.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

In this application, "at least one" means one or more, and "a plurality of" means two or more. In addition, "and/or" describes an association relationship between associated objects, and represents that three relationships may exist. For example, A and/or B may represent the following cases: Only A exists, both A and B exist, and only B exists, where A and B may be singular or plural. In the text descriptions of this application, a character "/" indicates an "or" relationship between the associated objects. In a formula in this application, the character "/" indicates a "division" relationship between the associated objects. In addition, "including at least one of A, B, and C" may represent: including A; including B; including C; including A and B; including A and C; including B and C; and including A, B, and C. Moreover, "including at least one of A, B, or C" may represent: including A; including B; including C; including A and B; including A and C; including B and C; and including A, B, and C.

It may be understood that various numbers in embodiments of this application are merely used for distinguishing for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method is applicable to a first network apparatus, and the method comprises:
receiving first information, wherein the first information comprises information used to configure a transmission of a reference signal of a terminal apparatus, and the reference signal is used to position the terminal device;
receiving a terminal apparatus context request message from a second network apparatus; and
sending second information to the second network apparatus, wherein the second information is determined based on the first information, the second information comprises information used to configure a transmission of the reference signal of the terminal apparatus, and a number of transmissions of the reference signal that is determined based on the first information is different from a number of transmissions of the reference signal that is determined based on the second information.

2. The method according to claim 1, wherein the second information comprises information of a first timestamp and information of a third number of transmissions, and the information of the first timestamp is information of a timestamp associated with the third number of transmissions.

3. The method according to claim 1, wherein the second information comprises information of a second number of transmissions; and
the second number of transmissions is determined based on a first number of transmissions and a number of transmissions of the reference signal that are performed by the terminal apparatus after the first network apparatus receives the first information, and the first number of transmissions is a number of transmissions of the reference signal that is determined based on the first information.

4. The method according to any one of claims 1 to 3, wherein the first information comprises preset information, there is an association relationship between the preset information and a location of the terminal apparatus, and the second information does not comprise the preset information.

5. The method according to claim 4, wherein the preset information comprises path loss reference information and/or spatial relation information.

6. A communication method, wherein the method is applicable to a second network apparatus, and the method comprises:
sending a terminal apparatus context request message to a first network apparatus; and
receiving second information from the first network apparatus, wherein the second information is determined based on first information, the first information comprises information used to configure a transmission of a reference signal of the terminal apparatus, the reference signal is used to position the terminal device, the second information comprises information used to configure a transmission of the reference signal of the terminal apparatus, and a number of transmissions of the reference signal that is determined based on the first information is different from a number of transmissions of the reference signal that is determined based on the second information.

7. The method according to claim 6, wherein the second information comprises information of a first timestamp and information of a third number of transmissions, and the information of the first timestamp is information of a timestamp associated with the third number of transmissions.

8. The method according to claim 6 or 7, wherein the second information comprises information of a second number of transmissions; and
the second number of transmissions is determined based on a first number of transmissions and a number of transmissions of the reference signal that are performed by the terminal apparatus after the first network apparatus receives the first information, and the first number of transmissions is a number of transmissions of the reference signal that is determined based on the first information.

9. The method according to any one of claims 6 to 8, wherein the first information comprises preset information, there is an association relationship between the preset information and a location of the terminal apparatus, and the second information does not comprise the preset information.

10. The method according to any one of claims 6 to 9, wherein after receiving the second information from the first network apparatus, the method further comprises:
determining the second number of transmissions of the reference signal based on the second information; and
when a number of transmissions performed by the terminal apparatus reaches the second number of transmissions, sending, to the terminal apparatus, information indicating that the terminal apparatus does not need to transmit the reference signal.

11. The method according to any one of claims 6 to 10, wherein the method further comprises:
sending a first message to a location management apparatus, wherein the first message is used to request to update path loss information and/or spatial relation information;
receiving fourth information from the location management apparatus, wherein the fourth information comprises path loss information and/or spatial relation information; and
sending configuration information of the reference signal to the terminal apparatus, wherein the configuration information of the reference signal is determined based on the fourth information and the second information.

12. The method according to any one of claims 6 to 11, wherein the method further comprises:
receiving measurement information from the terminal apparatus; and
sending the configuration information of the reference signal to the terminal apparatus, wherein the configuration information of the reference signal is determined based on the measurement information and the second information.

13. A communication apparatus, wherein the apparatus is a first network apparatus, and the apparatus comprises a processor and an interface, wherein
the processor is configured to:
receive first information through the interface, wherein the first information comprises information used to configure a transmission of a reference signal of a terminal apparatus, and the reference signal is used to position the terminal device;
receive a terminal apparatus context request message from a second network apparatus through the interface; and
send second information to the second network apparatus through the interface, wherein the second information is determined based on the first information, the second information comprises information used to configure a transmission of the reference signal of the terminal apparatus, and a number of transmissions of the reference signal that is determined based on the first information is different from a number of transmissions of the reference signal that is determined based on the second information.

14. The apparatus according to claim 13, wherein the second information comprises information of a first timestamp and information of a third number of transmissions, and the information of the first timestamp is information of a timestamp associated with the third number of transmissions.

15. The apparatus according to claim 13, wherein the second information comprises information of a second number of transmissions; and
the second number of transmissions is determined based on a first number of transmissions and a number of transmissions of the reference signal that are performed by the terminal apparatus after the first network apparatus receives the first information, and the first number of transmissions is a number of transmissions of the reference signal that is determined based on the first information.

16. The apparatus according to any one of claims 13 to 15, wherein the first information comprises preset information, there is an association relationship between the preset information and a location of the terminal apparatus, and the second information does not comprise the preset information.

17. The apparatus according to claim 16, wherein the preset information comprises path loss reference information and/or spatial relation information.

18. A communication apparatus, wherein the apparatus is a second network apparatus, and the apparatus comprises a processor and an interface, wherein
the processor is configured to:
send a terminal apparatus context request message to a first network apparatus through the interface; and
receive second information from the first network apparatus through the interface, wherein the second information is determined based on first information, the first information comprises information used to configure a transmission of a reference signal of the terminal apparatus, the reference signal is used to position the terminal device, the second information comprises information used to configure a transmission of the reference signal of the terminal apparatus, and a number of transmissions of the reference signal that is determined based on the first information is different from a number of transmissions of the reference signal that is determined based on the second information.

19. The apparatus according to claim 18, wherein the second information comprises information of a first timestamp and information of a third number of transmissions, and the information of the first timestamp is information of a timestamp associated with the third number of transmissions.

20. The apparatus according to claim 18, wherein the second information comprises information of a second number of transmissions; and
the second number of transmissions is determined based on a first number of transmissions and a number of transmissions of the reference signal that are performed by the terminal apparatus after the first network apparatus receives the first information, and the first number of transmissions is a number of transmissions of the reference signal that is determined based on the first information.

21. The apparatus according to any one of claims 18 to 20, wherein the first information comprises preset information, there is an association relationship between the preset information and a location of the terminal apparatus, and the second information does not comprise the preset information.

22. The apparatus according to any one of claims 18 to 21, wherein the processor is further configured to:
determine the second number of transmissions of the reference signal based on the second information; and
when a number of transmissions performed by the terminal apparatus reaches the second number of transmissions, send, to the terminal apparatus through the interface, information indicating that the terminal apparatus does not need to transmit the reference signal.

23. The apparatus according to any one of claims 18 to 22, wherein the processor is further configured to:
send a first message to a location management apparatus through the interface, wherein the first message is used to request to update path loss reference information and/or spatial relation information;
receive fourth information from the location management apparatus through the interface, wherein the fourth information comprises path loss reference information and/or spatial relation information; and
send configuration information of the reference signal to the terminal apparatus through the interface, wherein the configuration information of the reference signal is determined based on the fourth information and the second information.

24. The apparatus according to any one of claims 18 to 23, wherein the processor is further configured to:
receive measurement information from the terminal apparatus through the interface; and
send the configuration information of the reference signal to the terminal apparatus through the interface, wherein the configuration information of the reference signal is determined based on the measurement information and the second information.

25. A communication apparatus, comprising a processor and a memory, wherein
the memory is configured to store a computer program or instructions; and
the processor is configured to execute the computer program or the instructions in the memory, to perform the method according to any one of claims 1 to 12.

26. A communication apparatus, comprising a processing unit and a communication unit, wherein the processing unit is configured to perform the method according to any one of claims 1 to 12 through the communication unit.

27. A computer-readable storage medium, wherein the computer-readable storage medium stores computer-executable instructions, and when the computer-executable instructions are invoked by a computer, the method according to any one of claims 1 to 12 is performed.

28. A chip system, wherein the chip system comprises at least one processor and an interface circuit, the interface circuit and the at least one processor are interconnected through a line, and the processor performs the method according to any one of claims 1 to 12 by running instructions.

29. A computer program product, wherein the computer program product stores a computer program, the computer program comprises program instructions, and when the program instructions are executed by a computer, the computer is enabled to perform the method according to any one of claims 1 to 12.
